(19) Europäisches Patentamt
European Patent Office
Office européen des brevets

(11) Publication number: **0 149 099 A2**

(12) **EUROPEAN PATENT APPLICATION**

(21) Application number: 84114737.4

(22) Date of filing: 04.12.84

(51) Int. Cl.[4]: **A 01 N 47/12**
A 01 N 47/30, A 01 N 47/36
//(A01N47/12, 47:12, 43:70, 33:18), (A01N47/30, 47:12), (A01N47/36, 47:12)

(30) Priority: 05.12.83 US 557992
29.10.84 US 664561

(43) Date of publication of application: 24.07.85 Bulletin 85/30

(84) Designated Contracting States: AT BE CH DE FR GB IT LI NL SE

(71) Applicant: STAUFFER CHEMICAL COMPANY
Westport Connecticut 06880(US)

(72) Inventor: Mojica, Ellen Yurcak
845 Sunnyoaks Avenue
Campbell California 95008(US)

(74) Representative: Jaeger, Klaus, Dr. et al,
JAEGER & PARTNER Patentanwälte Bergstrasse 48 1/2
D-8035 München-Gauting(DE)

(54) **Synergistic herbicidal compositions.**

(57) Synergistic herbicidal activity is displayed by a composition comprising the following two components: (a) an herbicidally effective amount of a thiolcarbamate of the formula

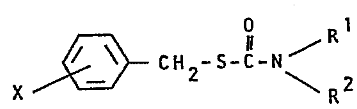

in which X is hydrogen, chlorine or bromine; and $R^1$ and $R^2$ are independently selected from the group consisting of $C_1$-$C_6$ alkyl and $C_5$-$C_7$ cycloalkyl, and (b) an herbicidally effective amount of a dimethyl urea compound of the formula

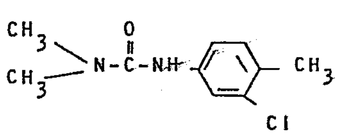 .

EP 0 149 099 A2

# SYNERGISTIC HERBICIDAL COMPOSITIONS

## Cross Reference to Related Applications

This application is a continuation-in-part of Application Serial No. 557,992, filed November 5, 1983.

## Background of the Invention

The protection of crops from weeds and other vegetation which inhibit crop growth is a constantly recurring problem in agriculture. To help combat this problem researchers in the field of synthetic chemistry have produced an extensive variety of chemicals and chemical formulations effective in the control of such unwanted growth. Chemical herbicides of many types have been disclosed in the literature and a large number are in commercial use.

In some cases, active herbicides have been shown to be more effective in combination than when applied individually. The result is often termed "synergism," since the combination demonstrates a potency or activity level exceeding that which it would be expected to have, based on a knowledge of the individual potencies of the components. The present invention resides in the discovery that certain thiolcarbamates and certain dimethyl ureas, already known individually for their herbicidal potency, display this effect when applied in combination.

## Prior Art

The two classes of compounds forming the combination which is the subject of the present invention are independently known in the art for their effects on plant growth. Thiolcarbamates are disclosed as herbicides in U.S. Patent Nos. 3,185,720 (Tilles et al., May 25, 1965), 3,198,786 (Tilles et al., August 3, 1965), and 2,913,327 (Tilles et al., November 17, 1959). N'-(3-Chloro-4-methylphenyl)-N',N-dimethyl urea, whose common name is chlortoluron, is sold in Europe under the tradename Dicuran by Ciga-Geigy Limited, Switzerland.

Description of the Invention

It has now been discovered that synergism in the control of undesirable vegetation is exhibited by compositions comprising a mixture of the following two components:

(a) an herbicidally effective amount of a thiolcarbamate of the formula

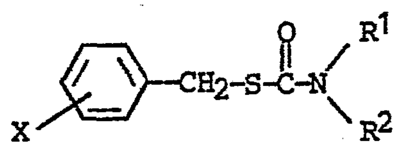

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a dimethyl urea compound of the formula

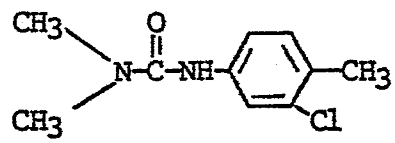

The term "alkyl" is used herein to denote both straight-chain and branched-chain groups. Examples of alkyl groups include methyl, ethyl, n-propyl, isopropyl, n-butyl, sec-butyl, isobutyl, etc. All carbon atom ranges are inclusive of their upper and lower limits.

Examples of thiolcarbamates useful in the present invention are:

1. S-benzyl dipropylthiolcarbamate
2. S-benzyl ethyl, 1,2-dimethylpropylthiolcarbamate
3. S-(2-chlorobenzyl)-N,N-diethylthiolcarbamate
4. S-(4-chlorobenzyl)-N,N-diethylthiolcarbamate

These and other thiolcarbamates within the scope of this invention can be prepared by the procedures described in U.S. Patent Nos. 2,913,327, 3,185,720, and 3,198,786 mentioned above, and U.S. Patents 3,144,475, 2,992,091 and 3,207,775.

The preferred thiolcarbamate for use in the invention :s S-benzyl dipropyl thiolcarbamate.

The preferred dimethyl urea for use in the compositions of the invention is N'-(3-chloro-4-methylphenyl)-N'N-dimethyl urea.

The terms "synergism" and "synergistic" are used herein to convey the result observed when a combination of herbicides demonstrates a potency in excess of that which the combination would be expected to produce on the basis of the potencies of each herbicide applied individually.

The term "herbicide" is used herein to denote a compound which controls or modifies the growth of plants. The term "herbicidally effective amount" is used to indicate the quantity of such a compound or combination of such compounds which is capable of producing a controlling or modifying effect. Controlling or modifying effects include all deviations from natural development, for example: killing, retardation, leaf burn, dwarfing and the like. The term "plants" is used to include all post-emergent vegetation, ranging from seedlings to established vegetation.

In the composition of this invention, the thiolcarbamate: chlortoluron weight ratio at which the herbicidal response is synergistic lies within the range of about 0.01:1 to about 20:1, preferably about 0.1:1 to about 10:1, most preferably about 0.1:1 to about 5:1.

Application rates will depend upon the weeds to be controlled and the degree of control desired. In general, the compositions of this invention are most efficiently employed at a rate of 0.01 to 50 pounds per acre (0.011 to 56 kilograms per hectare) of the active ingredients, preferably 0.1 to 25 pounds per acre (0.11 to 28 kilograms per hectare).

The compositions are particularly effective in controlling bedstraw (Galium aparine).

EXAMPLE I

The herbicidal responses from a combined use of chlortoluron (Compound 1, Table I) and one of two S-benzyl thiolcarbamates was studied by means of greenhouse experiments. Those S-benzyl thiolcarbamates employed were as follows:

Compound 2: S-benzyl dipropylthiolcarbamate

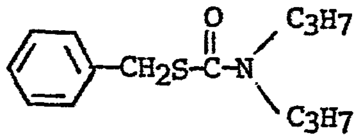

Compound 3: S-benzyl ethyl-1,2-dimethylpropylthiolcarbamate

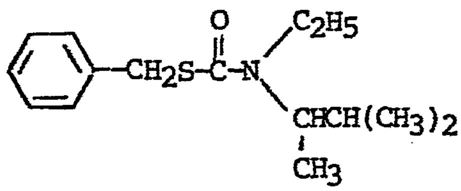

Aluminum pans measuring 18 x 12 x 5 cm were filled with a loamy sand soil and six furrows were impressed across the width of each flat. Five dicot species were seeded into furrows and covered with soil. The plant species included were:

| | | |
|---|---|---|
| sugarbeet | (SB-TM) | Beta vulgaris (L.) (Tefmono) |
| fumitory | (FUM) | Fumaria officinalis (L.) |
| bedstraw | (BDSW) | Galium aparine (L.) |
| wild mustard | (MD) | Sinapis arvensis (L.) |
| curly dock | (CD) | Rumex crispus (L.) |

Six monocots were seeded in the same manner as the dicots species, and included:

| | | |
|---|---|---|
| blackgrass | (BKGR) | Alopecurus myosuroides (Huds.) |
| wild oat | (WO) | Avena fatua (L.) |
| poverty brome | (PBRO) | Bromus sterilis (L.) |
| winter barley | (BAIG) | Hordeum vulgare (L.) (Igri) |
| perennial ryegrass | (PRGR) | Lolium perenne (L.) |
| winter wheat | (WHFL) | Triticum aestivum (L.) |

Chemical solutions, which were sprayed the same day of seeding, were prepared as follows:

All compounds were of technical grade, except Dicuran or chlortoluron, which was supplied as a 50% emulsifiable concentrate. A 1:1 ratio of acetone: water was used to put technical grade compounds into solution. Dicuran was diluted in water. The chemical solutions were

were delivered to the soil surface for preemergence applications by use of a linear spray talble. The table was calibrated to a spray volume of 80 gallons per acre (750 liters per hectare). Each compound was applied singly at the following rates of application:

Compound 1 (Dicuran) - 1.0 and 2.0 kg per hectare
Compounds 2 and 3 - 0.5, 1.0, 2.0 and 4.0 kilograms per hectare

All possible rates of application were used for combinations of Compound 1 (Dicuran) plus Compound 2 or Compound 3.

Flats were then placed in a shaded greenhouse, and watered by overhead sprinkling. Air temperatures ranged from 15°C to 27°C. Flats were kept moist during the course of each experiment.

Two to three weeks after treatment, each row of seedlings was visually rated for growth control due to all factors of injury. Untreated flats of seedlings were used for comparison, zero percent injury or growth control is equivalent to growth in control flats. One hundred percent growth control is equivalent to complete kill.

Herbicide interaction responses were evaluated by use of Limpel's formula (Limpel, L.E., et al., 1962, "Weed Control by Dimethyl-tetrachloroterephthalate Alone and in Certain Combinations," Proc. NEWCC, 16:48-53):

$$E = X + Y - \frac{XY}{100}$$

where E = expected response
where X = observed (O) value or percent growth control when the herbicide is applied singly; and
Y = observed (O) value or percent growth control when the second herbicide is applied singly.

A response is synergistic when an observed value is greater than the calculated value, a synergistic response is understood to be one in which the interaction response is greater than the sum of responses from the individual chemical treatments. An antagonistic response is the opposite situation.

**TABLE I**
**Preemergence**
**Percent Growth Control**

| Treatment | kg/ha | ND O | ND E | ND R | CD O | CD E | CD R | BDGW O | BDGW E | BDGW R | FUN O | FUN E | FUN R | PBRO O | PBRO E | PBRO R |
|---|---|---|---|---|---|---|---|---|---|---|---|---|---|---|---|---|
| Control | | 0* | | | 0 | | | 0 | | | 0 | | | 0 | | |
| #1 | 1 | 98 | | | 100 | | | 0 | | | 65 | | | 20 | | |
| | 2 | 100 | | | 100 | | | 0 | | | 50 | | | 25 | | |
| #2 | 1/2 | 0 | | | 0 | | | 0 | | | 0 | | | 93 | | |
| | 1 | 0 | | | 0 | | | 20 | | | 0 | | | 95 | | |
| | 2 | 18 | | | 28 | | | 30 | | | 10 | | | 100 | | |
| | 4 | 30 | | | 25 | | | 33 | | | 93 | | | 100 | | |
| #3 | 1/2 | 0 | | | 0 | | | 0 | | | 0 | | | 100 | | |
| | 1 | 0 | | | 0 | | | 0 | | | 0 | | | 100 | | |
| | 2 | 0 | | | 0 | | | 0 | | | 0 | | | 100 | | |
| | 4 | NOT TESTED - CHEMICAL DEPLETED | | | | | | | | | | | | | | |
| 1 + 2 | 1 + 1/2 | 100 | 98 | S | 100 | 100 | AD | 23 | 0 | S | 65 | 65 | AD | 83 | 94 | A |
| | 1 + 1 | 100 | 98 | S | 100 | 100 | AD | 23 | 20 | S | 60 | 65 | A | 95 | 96 | A |
| | 1 + 2 | 98 | 98 | AD | 100 | 100 | AD | 63 | 30 | S | 88 | 54 | S | 100 | 100 | AD |
| | 1 + 4 | 100 | 99 | S | 100 | 100 | AD | 43 | 33 | S | 83 | 98 | A | 100 | 100 | AD |
| | 2 + 1/2 | 100 | 100 | AD | 100 | 100 | AD | 30 | 0 | S | 43 | 50 | A | 100 | 95 | S |
| | 2 + 1 | 100 | 100 | AD | 100 | 100 | AD | 28 | 20 | S | 53 | 50 | S | 100 | 96 | S |
| | 2 + 2 | 100 | 100 | AD | 100 | 100 | AD | 63 | 30 | S | 95 | 55 | S | 100 | 100 | AD |
| | 2 + 4 | 100 | 100 | AD | 100 | 100 | AD | 73 | 33 | S | 100 | 97 | S | 100 | 100 | AD |
| 1 + 3 | 1 + 1/2 | 95 | 98 | A | 100 | 100 | AD | 20 | 0 | S | 68 | 65 | S | 100 | 100 | AD |
| | 1 + 1 | 100 | 98 | S | 100 | 100 | AD | 33 | 0 | S | 30 | 65 | A | 100 | 100 | AD |
| | 1 + 2 | 90 | 98 | A | 100 | 100 | AD | 48 | 0 | S | 48 | 65 | A | 100 | 100 | AD |
| | 1 + 4 | NOT TESTED | | | | | | | | | | | | | | |
| | 2 + 1/2 | 100 | 100 | AD | 100 | 100 | AD | 63 | 0 | S | 65 | 50 | S | 100 | 100 | AD |
| | 2 + 1 | 100 | 100 | AD | 100 | 100 | AD | 38 | 0 | S | 68 | 50 | S | 100 | 100 | AD |
| | 2 + 2 | 100 | 100 | AD | 100 | 100 | AD | 28 | 0 | S | 85 | 50 | S | 100 | 100 | AD |
| | 2 + 4 | NOT TESTED | | | | | | | | | | | | | | |

| Treatment | kg/ha | BKGR O | BKGR E | BKGR R | PRGR O | PRGR E | PRGR R | WO O | WO E | WO R | BBTM O | BBTM E | BBTM R | RAIG O | RAIG E | RAIG R | WIFL O | WIFL E | WIFL R |
|---|---|---|---|---|---|---|---|---|---|---|---|---|---|---|---|---|---|---|---|
| Control | | 0 | | | 0 | | | 0 | | | 0 | | | 0 | | | 0 | | |
| #1 | 1 | 15 | | | 28 | | | 50 | | | 95 | | | 28 | | | 28 | | |
| | 2 | 28 | | | 48 | | | 68 | | | 100 | | | 48 | | | 48 | | |
| #2 | 1/2 | 95 | | | 73 | | | 88 | | | 0 | | | 15 | | | 30 | | |
| | 1 | 95 | | | 83 | | | 95 | | | 0 | | | 15 | | | 23 | | |
| | 2 | 95 | | | 80 | | | 98 | | | 38 | | | 55 | | | 68 | | |
| | 4 | 100 | | | 100 | | | 100 | | | 55 | | | 80 | | | 88 | | |
| #3 | 1/2 | 95 | | | 0 | | | 90 | | | 0 | | | 0 | | | 18 | | |
| | 1 | 95 | | | 90 | | | 93 | | | 0 | | | 35 | | | 60 | | |
| | 2 | 98 | | | 68 | | | 95 | | | 0 | | | 63 | | | 73 | | |
| | 4 | NOT TESTED - CHEMICAL DEPLETED | | | | | | | | | | | | | | | | | |
| 1 + 2 | 1 + 1/2 | 83 | 96 | A | 78 | 81 | A | 90 | 94 | A | 100 | 95 | S | 45 | 39 | S | 43 | 50 | A |
| | 1 + 1 | 93 | 96 | A | 85 | 88 | A | 93 | 98 | A | 100 | 95 | S | 50 | 39 | S | 40 | 45 | A |
| | 1 + 2 | 100 | 96 | S | 98 | 86 | S | 98 | 99 | A | 100 | 97 | S | 78 | 68 | S | 70 | 77 | A |
| | 1 + 4 | 100 | 100 | AD | 88 | 100 | A | 93 | 100 | A | 100 | 98 | S | 75 | 86 | S | 70 | 85 | A |
| | 2 + 1/2 | 93 | 96 | A | 85 | 86 | A | 95 | 96 | A | 50 | 100 | A | 73 | 56 | S | 65 | 64 | S |
| | 2 + 1 | 90 | 96 | A | 73 | 91 | A | 95 | 98 | A | 100 | 100 | AD | 70 | 56 | S | 70 | 60 | S |
| | 2 + 2 | 100 | 96 | S | 100 | 90 | S | 100 | 99 | S | 100 | 100 | AD | 85 | 77 | S | 78 | 83 | A |
| | 2 + 4 | 98 | 100 | A | 100 | 100 | AD | 100 | 100 | AD | 100 | 100 | AD | 93 | 90 | S | 93 | 92 | S |
| 1 + 3 | 1 + 1/2 | 83 | 96 | A | 83 | 28 | S | 83 | 95 | A | 100 | 95 | S | 60 | 28 | S | 60 | 41 | S |
| | 1 + 1 | 95 | 96 | A | 90 | 93 | A | 95 | 97 | A | 100 | 95 | S | 78 | 53 | S | 88 | 71 | S |
| | 1 + 2 | 98 | 98 | AD | 98 | 77 | S | 98 | 98 | AD | 100 | 95 | S | 88 | 73 | S | 93 | 81 | S |
| | 1 + 4 | NOT TESTED | | | | | | | | | | | | | | | | | |
| | 2 + 1/2 | 65 | 98 | A | 60 | 48 | S | 83 | 97 | A | 100 | 100 | AD | 63 | 48 | S | 55 | 57 | A |
| | 2 + 1 | 93 | 98 | A | 90 | 87 | S | 88 | 98 | A | 100 | 100 | AD | 78 | 66 | S | 83 | 79 | S |
| | 2 + 2 | 100 | 98 | S | 100 | 83 | S | 100 | 98 | S | 100 | 100 | AD | 93 | 81 | S | 95 | 86 | S |
| | 2 + 4 | NOT TESTED | | | | | | | | | | | | | | | | | |

* Average of two replications.
O = Observed response (% growth injury); E = Expected response derived from Limpel's Formula; R = Relationship which may be: A = antagonistic; S = synergistic; and AD = additive.

Results

After reveiw of the foregoing data, it can be concluded that combination applications of Compound 1 (Dicuran) with any of the Compounds 2 or 3 results in various synergistic herbicide responses with both monocotyledonous and dicotyledonous plant species.

The S-benzyl thiolcarbamates described herein can also be evaluated in the same manner as in Example 1 above, by combining the S-benzyl thiolcarbamates with other herbicides such as Glean®, commonly known as chlorsulfuron, 2-chloro-N-[(4-methoxy-6-methyl-1,3,5-triazine-2-yl) amino carbonyl]-benzenesulfonamide, sold by the DuPont Company, Wilmington, Delaware. Other compounds which can be evaluated in conjunction with the S-benzyl thiolcarbamates referred to herein include triazines in general, such as Aatrex®, 2-chloro-4-(ethylamino)-6-(isopropylamino)-S-triazine, solid by Ciba-Geigy Corporation and also sold under the tradename Lasso® by the Monsanto Chemical Company, St. Louis, Missouri. Also, such compounds as Bladex®, 2[(4-chloro-6-(ethylamino)-s-triazine-2-yl)amino]-2-methylpropionitrile, sold by the Shell Chemical Company, Houston, Texas, and others of the same general type can be evaluated.

The S-benzyl thiolcarbamates can also be evaluated in conjunction with phenoxyphenoxy pentanoic acid esters and pyridylphenoxy pentanoic acid esters as described in U.S. Patent Application Serial Nos. 486,730 and 486,750, filed April 20, 1983. Specific ones of these compounds include ethyl 4-[4-(3-chloro, 5-trifluoromethyl-2-pyridyloxy)phenoxy]-3-hydroxypentanoate; methyl 4-[4-(3-chloro, 5-trifluoromethyl-2-pyridyloxy)phenoxy]-3-hydroxypentanoate; and ethyl 4[-4-(3-chloro, 5-trifluoromethyl-2-phenoxy)phenoxy]-3-hydroxypentanoate.

The S-benzyl thiolcarbamate compounds can also be evaluated in conjuntion with phenoxy, phenoxy propionic acids and esters thereof, such as are described in German Patent 2,531,643 and also pyridylphenoxy propionic acids and esters such as are described and claimed in British Patent 1,599,121.

The S-benzyl thiolcarbamate compounds disclosed herein can also be evaluated for synergistic herbicidal activity in conjunction with the

phenoxyphenyl types of herbicides represented by 2-chloro-1-(3-ethoxy-4-nitrophenoxy)-4-(trifluoromethyl)benzene, sold under the tradename Goal® by the Rohm and Haas Company, Springhouse, Pennsylvania, and sodium 5-[2-chloro-4-(trifluoromethyl)phenoxy]-2-nitrobenzoate, sold under the tradename Blazer 2S® by the Rohm and Haas Company and under the tradename Tackle 2AS® by Rhone-Poulenc Chemical Company, Monmouth, New Jersey.

Still other herbicides which can be tested for synergistic herbicidal activity in conjunction with the S-benzyl thiolcarbamates disclosed herein include the acetanilide type of herbicides, representative compounds of which include 2-chloro-2',6'-diethyl-N-(methoxymethyl) acetanilide, sold under the tradename Lasso® by the Monsanto Company, St. Louis, Missouri, 2-chloro-2-N-(2-ethyl-6-methylphenyl)-N-(2-methoxy-1-methylethyl) acetamide, sold under the tradename Dual® by the Ciba-Geigy Company, Agricultural Division, Greensboro, North Carolina. Still others include N-(butoxymethyl)-2-chloro-2',6'-diethylacetanilide, sold under the tradename Machete® by the Monsanto Company, St. Louis, Missouri, and others of the same general type.

Still other herbicides which can be expected to exhibit synergistic herbicidal activity in conjunction with the S-benzyl thiolcarbamates disclosed herein are carbamates, such as methylsulfanilyl carbamate, having the common name of asulan and sold under the tradename Asilan®. Other suitable carbamates include 4-chloro-2-butynyl-N-chlorocarbanilate sold under the tradename Carbyne® by the Velsicol Division of Gulf Corp., Chicago, Illinois, and isopropyl m-chlorocarbanilate, sold under the tradename Furloe® by PPG Industries, Pittsburg, Pennsylvania.

Still other compounds include $\alpha,\alpha,\alpha$-trifluoro-2,6-dinitro-N,N-dipropyl-p-toluidine, sold under the tradename Treflan® by the Elanco® Products Company, a division of Eli Lilly Company, Greenfield, Indiana, and O,O-diisopropylphosphorodithioate-S-ester with N-(2-mercaptoethyl) benzenesulfonamide, sold under the tradename Betasan® by the Stauffer Chemical Company, Westport, Connecticut, 3,6-dichloro-O-anisic acid, having the common name dicamba, and sold under the tradename Banvel® by the Velsicol Chemical Company.

Still more herbicides which can be evaluated for herbicidal activity in conjunction with the S-benzyl thiolcarbamates of the instant invention include other thiolcarbamate compounds, such as S-ethyl N-ethylthiocyclohexane carbamate, sold under the tradename RO-NEET® by Stauffer Chemical Company, S-ethyl dipropyl thiolcarbamate, sold under the tradename EPTAM® sold by Stauffer Chemical Company, S-ethyl diisobutyl thiolcarbamate, sold under the tradename Sutan® sold by Stauffer Chemical Company, S-(2,3-dichloroallyl)-diisopropyl thiolcarbamate sold under the tradename Avadex®, by the Monsanto Company, St. Louis, Missouri, S-propyl dipropyl thiolcarbamate, sold under the tradename Vernam® by the Stauffer Chemical Company, Westport, Connecticut and S-[(4-chlorophenyl)methyl]-diethylcarbamothioate, sold under the tradename Saturn® by the Kumiai Chemical Company, Tokyo, Japan. Still further herbicide compounds which can be evaluated for synergistic activity in conjunction with the S-benzyl thiolcarbamates disclosed herein include the triazines in general, including 2-chloro-4-(ethylamino)-6-(isopropylamino)-s-triazine, sold under the tradename Atrazine® by the Shell Chemical Company, Houston, Texas, 2-[[4-chloro-6-(ethylamino)-s-triazin-2-yl]amino]-2-methylpropionitrile, sold under the tradename Bladex® by the Shell Chemical Company, Houston, Texas, 2,4-bis(isopropylamino)-6-(methylthio)-s-triazine sold by the Ciba-Geigy Company, Greensboro, North Carolina.

Still other triazine compounds include 2,4-bis(isopropylamino)-6-(methylthio)-s-triazine, sold by the Ciba-Geigy Company under the tradename Caprol 80W and 2-chloro-4,6-bis(isopropylamino)-s-triazine sold by the Ciba-Geigy Company under the tradename Milogard 80W and other designations.

Synergism in Weed Control by use of
Chlortoluron and S-Benzyl Thiolcarbamates

The herbicidal responses from a combined use of S-benzyl dipropylthiolcarbamate and one of the following herbicides were tested by means of greenhouse experiments:

Compound No. 4: N-(4-isopropylphenyl)-N',N'-dimethylurea

(isoproturon)

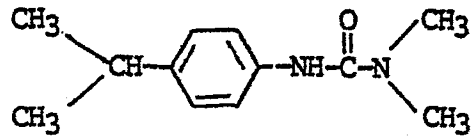

Compound No. 5: 3-(3,4-dichlorophenyl)-1-methoxy-1-methylurea

(linuron)

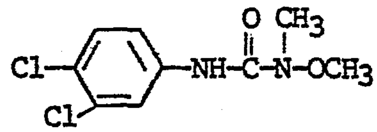

Compound No. 6: 1,3-dimethyl-3-(2-benzothiazolyl)urea

(methabenzthiazuron)

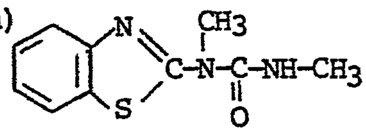

Compound No. 7: N-(3-chloro-4-methoxyphenyl)-N,N-dimethylurea

(metoxuron)

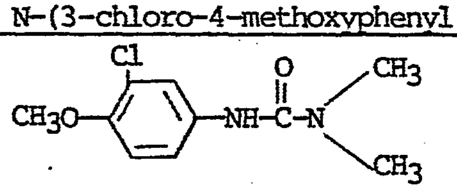

Compound No. 8: 1-n-butyl-3-(3,4-dichlorophenyl)-1-methylurea

(neburon)

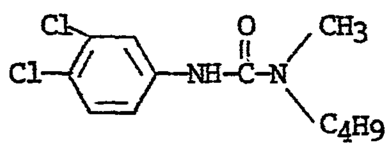

Compound No. 9: 2-t-butylamino-4-ethylamino-6-methylthio-s-triazine

(terbutryn)

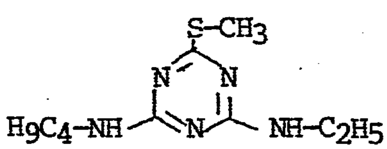

Compound No. 10: S-2,3,3-trichloroallyl-diisopropyl thiolcarbamate

(triallate)

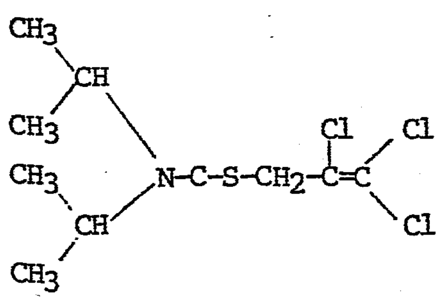

Compound No. 11: α,α,α-trifluoro-2,6-dinitro-N,N-dipropyl-p-toluidine
(trifluralin)

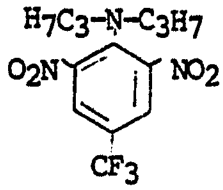

Compounds 4-11 are all commercially available or known in the art.

Tests were conducted as follows: aluminum pans measuring 19 x 8 x 6 cm were filled with a loamy sand soil and six furrows were impressed across the width of each flat. The following plant species were seeded into the furrows:

| | | |
|---|---|---|
| fool's parsley | (FOPA) | (Aethusa cynapium) |
| blackgrass | (BKGR) | (Alopecurus myosuroides) |
| wild oats | (WG) | (Avena fatua) |
| sugarbeet | (SBTM) | (Beta vulgaris) |
| oilseed rape | (RAJN) | (Brassica napus) |
| poverty brome | (PBRO) | (Bromus sterilis) |
| fumitory | (FUM) | (Fumaria officinalis) |
| catchweed bedstraw | (BDWS) | (Galium aparine) |
| winter barley | (BA) | [Hordeum vulgare) |
| annual ryegrass | (ARG) | (Lolium multiflorum) |
| scented mayweed | (MARE) | (Matricaria recutita) |
| poppy | (POP) | (Papaver spp.) |
| reed canarygrass | (REED) | (Phalaris arundinaceae) |
| annual bluegrass | (ABG) | (Poa annua) |
| mustard | (MD) | Sinapis arvensis) |
| winter wheat | (WHFL) | (Triticum aestivum) |
| ivyleaf speedwell | (ILSW) | (Veronica hederifolia) |

All or some of the above listed plants species were used in each of the eight separate tests. Chemical solutions, which were sprayed the same day as seeding, were prepared as follows:

Compounds were used as formoulations or were of technical grade (see data tables). A 1:1 ratio of acetone and water was used to put

technical grade compounds into solution. Formulated materials were dissolved in water only. The chemical solutions were delivered to the soil surface for pre-emergence applications by use of a linear spray table. The table was calibrated to a spray volume of 25 gallons per acre (235 liters per hectare). Each compound was applied singly at the following rates of application:

| | Kilograms per hectare |
|---|---|
| Compound No. 1 | 0.25, 0.50, 1.00 and 2.00 |
| Compound No. 4 | 0.25, 0.50, 1.00 and 2.00 |
| Compound No. 5 | 0.50, 1.00, 2.00 and 3.00 |
| Compound No. 6 | 0.50, 1.00, 2.00 and 3.00 |
| Compound No. 7 | 1.00, 2.00, 3.00 and 4.00 |
| Compound No. 8 | 1.00, 2.00, 3.00 and 4.00 |
| Compound No. 9 | 0.50, 1.00, 2.00 and 3.00 |
| Compound No. 10 | 0.125, 0.25, 0.50 and 1.00 |
| Compound No. 11 | 0.0625, 0.125, 0.25 and 0.50 |

Compound No. 1 was applied in all possible rates of application combinations with each of Compound Nos. 4 through 11 in separate tests. Each test was arranged as a 5 x 5 factorial (includes zero rate of application), and designed as a randomized complete block with two replications.

Flats were placed in a shaded greenhouse after spraying, and watered by overhead sprinkling. Air temperatures ranged from 15°C to 17°C. Flats were kept moist during the course of each experiment.

Fifteen to twenty-six days after treatment, each row of seedlings was visually rated for growth control due to all factors of injury. Untreated flats of seedlings were used for comparison. Zero percent injury or growth control is equivalent to growth in control flats. One hundred percent growth control is equivalent to complete kill.

Herbicide interaction responses were evaluated by use of Limpel's formula as above.

The response or relationship (R) interaction from a combined herbicide treatment is synergistic (S) when an observed value is greater than an expected value. A synergistic response is understood to be one in which the interaction response is greater than the sum of responses from the individual chemical treatments. An antagonistic (A) response is the opposite situation. A response is additive (AD) when the observed and expected response is equal.

The following eight tables show the averaged data and results for each experiment. It can be concluded that combination applications of Compound 1 with any of the Compounds 4 through 11 results in various synergistic herbicide responses.

TABLE 2

Pre-emergence = S-benzyl dipropylthiolcarbamate + N-(4-isopropylphenyl)-N',N'-dimethylurea

Percent Growth Control

| kg/ha | BDSW | | | ILSW | | | SBTM | | | FUM | | | POP | | | MARE | | | WO | | | PBRO | | |
|---|---|---|---|---|---|---|---|---|---|---|---|---|---|---|---|---|---|---|---|---|---|---|---|---|
| | O | E | R | O | E | R | O | E | R | O | E | R | O | E | R | O | E | R | O | E | R | O | E | R |
| 0 + 0 | 0 | | | | | | 0 | | | 0 | | | 0 | | | 0 | | | 0 | | | 0 | | |
| 0 + 1/4 | 0 | | | | | | 70 | | | 10 | | | 43 | | | 60 | | | 20 | | | 0 | | |
| 0 + 1/2 | 0 | | | | | | 45 | | | 45 | | | 53 | | | 55 | | | 30 | | | 0 | | |
| 0 + 1 | 0 | | | | | | 100 | | | 43 | | | 58 | | | 73 | | | 50 | | | 5 | | |
| 0 + 2 | 0 | | | | | | 100 | | | 40 | | | 70 | | | 45 | | | 35 | | | 5 | | |
| 1/4 + 0 | 20 | | | | | | 45 | | | 23 | | | 0 | | | 0 | | | 33 | | | 0 | | |
| 1/4 + 1/4 | 38 | 20 | S | | | | 98 | 84 | S | 50 | 31 | S | 55 | 43 | S | 60 | 60 | AD | 48 | 46 | S | 35 | 0 | S |
| 1/4 + 1/2 | 28 | 20 | S | | | | 100 | 97 | S | 88 | 58 | S | 88 | 53 | S | 70 | 55 | S | 38 | 53 | A | 33 | 0 | S |
| 1/4 + 1 | 20 | 20 | AD | | | | 100 | 100 | AD | 45 | 56 | A | 83 | 58 | S | 35 | 73 | A | 45 | 67 | A | 25 | 5 | S |
| 1/4 + 2 | 20 | 20 | AD | | | | 100 | 100 | AD | 88 | 54 | S | 93 | 70 | S | 53 | 45 | S | 48 | 57 | A | 35 | 5 | S |
| 1/2 + 0 | 20 | | | | | | 58 | | | 45 | | | 60 | | | 20 | | | 45 | | | 53 | | |
| 1/2 + 1/4 | 25 | 20 | S | | | | 95 | 87 | S | 75 | 51 | S | 95 | 77 | S | 75 | 68 | S | 60 | 56 | S | 63 | 53 | S |
| 1/2 + 1/2 | 20 | 20 | AD | | | | 100 | 98 | S | 40 | 70 | A | 88 | 81 | S | 85 | 64 | S | 58 | 62 | A | 75 | 53 | S |
| 1/2 + 1 | 20 | 20 | AD | | | | 100 | 100 | AD | 93 | 69 | S | 95 | 83 | S | 93 | 78 | S | 60 | 73 | A | 70 | 55 | S |
| 1/2 + 2 | 33 | 20 | S | | | | 100 | 100 | AD | 98 | 67 | S | 93 | 88 | S | 93 | 56 | S | 70 | 64 | S | 85 | 55 | S |
| 1 + 0 | 23 | | | | | | 90 | | | 48 | | | 50 | | | 20 | | | 60 | | | 93 | | |
| 1 + 1/4 | 35 | 23 | S | | | | 100 | 97 | S | 88 | 62 | S | 88 | 72 | S | 50 | 68 | A | 58 | 68 | A | 93 | 93 | AD |
| 1 + 1/2 | 35 | 23 | S | | | | 100 | 100 | AD | 95 | 77 | S | 95 | 77 | S | 68 | 64 | S | 70 | 72 | A | 90 | 93 | A |
| 1 + 1 | 38 | 23 | S | | | | 100 | 100 | AD | 95 | 76 | S | 98 | 79 | S | 95 | 78 | S | 73 | 80 | A | 95 | 93 | S |
| 1 + 2 | 40 | 23 | S | | | | 100 | 100 | AD | 98 | 75 | S | 100 | 85 | S | 95 | 56 | S | 75 | 74 | A | 95 | 93 | S |
| 2 + 0 | 48 | | | | | | 100 | 100 | AD | 100 | | | 100 | | | 80 | | | 73 | | | 98 | | |
| 2 + 1/4 | 40 | 48 | A | | | | 100 | 100 | AD | 90 | 100 | A | 100 | 100 | AD | 100 | 92 | S | 80 | 78 | S | 100 | 98 | S |
| 2 + 1/2 | 50 | 48 | S | | | | 100 | 100 | AD | 95 | 100 | A | 85 | 100 | A | 88 | 91 | A | 85 | 81 | S | 98 | 98 | AD |
| 2 + 1 | 50 | 48 | S | | | | 100 | 100 | AD | 95 | 100 | A | 100 | 100 | AD | 93 | 95 | A | 85 | 87 | A | 100 | 98 | S |
| 2 + 2 | 50 | 48 | S | | | | 100 | 100 | AD | 100 | 100 | AD | 100 | 100 | AD | 95 | 89 | S | 93 | 83 | A | 98 | 98 | AD |

TABLE 2
(Continued)

| kg/ha | REED O | REED E | REED R | BKGR O | BKGR E | BKGR R | PRGR O | PRGR E | PRGR R | ABG O | ABG E | ABG R | WHFL O | WHFL E | WHFL R | BAIG O | BAIG E | BAIG R | RAJN O | RAJN E | RAJN R | MD O | MD E | MD R |
|---|---|---|---|---|---|---|---|---|---|---|---|---|---|---|---|---|---|---|---|---|---|---|---|---|
| 0 + 0 | 0 | | | 0 | | | 0 | | | 0 | | | 0 | | | 0 | | | 0 | | | 0 | | |
| 0 + 1/4 | 35 | | | 10 | | | 0 | | | 8 | | | 5 | | | 0 | | | 0 | | | 0 | | |
| 0 + 1/2 | 43 | | | 10 | | | 10 | | | 15 | | | 0 | | | 0 | | | 20 | | | 23 | | |
| 0 + 1 | 50 | | | 25 | | | 25 | | | 23 | | | 15 | | | 15 | | | 63 | | | 50 | | |
| 0 + 2 | 53 | | | 35 | | | 25 | | | 30 | | | 15 | | | 15 | | | 53 | | | 38 | | |
| 1/4 + 0 | 75 | | | 70 | | | 0 | | | 0 | | | 0 | | | 0 | | | 0 | | | 0 | | |
| 1/4 + 1/4 | 83 | 84 | A | 65 | 73 | A | 30 | 0 | S | 23 | 8 | S | 5 | 5 | AD | 0 | 0 | AD | 65 | 0 | S | 35 | 0 | S |
| 1/4 + 1/2 | 88 | 86 | S | 68 | 73 | A | 35 | 10 | S | 35 | 15 | S | 0 | 0 | AD | 0 | 0 | AD | 70 | 20 | S | 58 | 23 | S |
| 1/4 + 1 | 75 | 88 | A | 55 | 78 | A | 23 | 25 | A | 20 | 23 | A | 0 | 15 | A | 8 | 15 | A | 78 | 63 | S | 63 | 50 | S |
| 1/4 + 2 | 85 | 88 | A | 73 | 81 | A | 38 | 25 | S | 23 | 30 | A | 10 | 15 | A | 5 | 5 | AD | 88 | 53 | S | 70 | 38 | S |
| 1/2 + 0 | 90 | | | 70 | | | 40 | | | 20 | | | 20 | | | 5 | | | 23 | | | 20 | | |
| 1/2 + 1/4 | 90 | 94 | A | 85 | 73 | S | 53 | 40 | S | 35 | 26 | S | 18 | 24 | S | 0 | 5 | A | 78 | 23 | S | 68 | 20 | S |
| 1/2 + 1/2 | 95 | 94 | S | 83 | 73 | S | 50 | 46 | S | 40 | 32 | S | 35 | 20 | S | 25 | 5 | S | 90 | 38 | S | 90 | 38 | S |
| 1/2 + 1 | 95 | 95 | AD | 80 | 78 | S | 60 | 55 | S | 50 | 38 | S | 40 | 32 | S | 20 | 19 | S | 98 | 72 | S | 88 | 60 | S |
| 1/2 + 2 | 98 | 95 | S | 90 | 81 | S | 65 | 55 | S | 55 | 44 | S | 35 | 32 | S | 20 | 10 | S | 95 | 63 | S | 88 | 50 | S |
| 1 + 0 | 95 | | | 80 | | | 80 | | | 50 | | | 53 | | | 20 | | | 40 | | | 40 | | |
| 1 + 1/4 | 93 | 98 | A | 80 | 82 | A | 58 | 80 | A | - | 54 | - | 50 | 55 | A | 5 | 20 | A | 78 | 40 | S | 55 | 40 | S |
| 1 + 1/2 | 98 | 97 | S | 90 | 82 | S | 80 | 82 | A | 35 | 58 | A | 45 | 53 | A | 10 | 20 | A | 100 | 52 | S | 95 | 54 | S |
| 1 + 1 | 95 | 98 | A | 90 | 85 | S | 80 | 85 | A | 55 | 62 | A | 48 | 60 | A | 15 | 32 | A | 100 | 78 | S | 85 | 70 | S |
| 1 + 2 | 98 | 98 | AD | 93 | 87 | S | 85 | 85 | AD | 70 | 65 | S | 73 | 60 | S | 30 | 24 | S | 100 | 72 | S | 98 | 63 | S |
| 2 + 0 | 100 | | | 83 | | | 83 | | | 70 | | | 73 | | | 28 | | | 40 | | | 40 | | |
| 2 + 1/4 | 100 | 100 | AD | 93 | 94 | A | 93 | 83 | S | 83 | 72 | S | 83 | 74 | S | 38 | 28 | S | 100 | 40 | S | 98 | 40 | S |
| 2 + 1/2 | 100 | 100 | AD | 98 | 94 | S | 85 | 85 | AD | 70 | 75 | A | 83 | 73 | S | 48 | 28 | S | 95 | 52 | S | 93 | 54 | S |
| 2 + 1 | 100 | 100 | AD | 97 | 95 | A | 85 | 87 | A | 70 | 77 | A | 83 | 77 | S | 50 | 39 | S | 100 | 78 | S | 100 | 70 | S |
| 2 + 2 | 100 | 100 | AD | 90 | 96 | A | 90 | 87 | S | 75 | 79 | A | 75 | 77 | A | 43 | 32. | S | 100 | 72 | S | 100 | 63 | S |

TABLE 3

Pre-emergence = S-benzyl dipropylthiolcarbamate + 3-(3,4-dichlorophenyl)-1-methoxy-1-methylurea

Percent Growth Control

| kg/ha | BDSW | | | WO | | | PBRO | | | REED | | | BKGR | | | PRGR | | | ABG | | | WHFL | | | BAIG | | |
|---|---|---|---|---|---|---|---|---|---|---|---|---|---|---|---|---|---|---|---|---|---|---|---|---|---|---|---|
| | O | E | R | O | E | R | O | E | R | O | E | R | O | E | R | O | E | R | O | E | R | O | E | R | O | E | R |
| 0 + 0 | 0 | | | 0 | | | 0 | | | 0 | | | 0 | | | 0 | | | 0 | | | 0 | | | 0 | | |
| 0 + 1/2 | 0 | | | 65 | | | 45 | | | 65 | | | 25 | | | 75 | | | 10 | | | 28 | | | 23 | | |
| 0 + 1 | 10 | | | 65 | | | 45 | | | 73 | | | 30 | | | 75 | | | 15 | | | 25 | | | 25 | | |
| 0 + 2 | 45 | | | 78 | | | 63 | | | 90 | | | 38 | | | 90 | | | 30 | | | 38 | | | 30 | | |
| 0 + 3 | 60 | | | 85 | | | 63 | | | 88 | | | 55 | | | 100 | | | 40 | | | 55 | | | 55 | | |
| 1/4 + 0 | 30 | | | 65 | | | 53 | | | 45 | | | 40 | | | 25 | | | 0 | | | 8 | | | 0 | | |
| 1/4 + 1/2 | 40 | 30 | S | 78 | 88 | A | 63 | 74 | A | 93 | 81 | S | 70 | 55 | S | 75 | 81 | S | 20 | 10 | S | 23 | 34 | A | 15 | 23 | A |
| 1/4 + 1 | 40 | 37 | S | 80 | 88 | A | 88 | 74 | S | 93 | 85 | S | 85 | 58 | S | 88 | 81 | S | 40 | 15 | S | 45 | 31 | S | 45 | 25 | S |
| 1/4 + 2 | 45 | 62 | A | 88 | 92 | A | 70 | 83 | A | 98 | 95 | S | 95 | 63 | S | 95 | 93 | S | 50 | 30 | S | 63 | 43 | S | 60 | 30 | S |
| 1/4 + 3 | 63 | 72 | A | 85 | 95 | A | 70 | 83 | A | 100 | 93 | S | 93 | 73 | S | 95 | 100 | A | 43 | 40 | S | 60 | 59 | S | 63 | 55 | S |
| 1/2 + 0 | 40 | | | 65 | | | 70 | | | 70 | | | 53 | | | 48 | | | 23 | | | 28 | | | 18 | | |
| 1/2 + 1/2 | 43 | 40 | S | 75 | 88 | A | 90 | 84 | S | 85 | 90 | A | 70 | 65 | S | 60 | 87 | A | 28 | 31 | A | 28 | 48 | A | 20 | 37 | A |
| 1/2 + 1 | 53 | 46 | S | 85 | 88 | A | 88 | 84 | S | 95 | 92 | S | 88 | 67 | S | 90 | 87 | S | 48 | 35 | S | 58 | 46 | S | 48 | 39 | S |
| 1/2 + 2 | 58 | 67 | A | 83 | 92 | A | 88 | 89 | A | 95 | 97 | A | 93 | 71 | S | 93 | 95 | A | 43 | 46 | A | 45 | 55 | A | 43 | 43 | AD |
| 1/2 + 3 | 68 | 76 | A | 88 | 95 | A | 93 | 89 | S | 95 | 96 | A | 93 | 79 | S | 95 | 100 | A | 45 | 54 | A | 43 | 68 | A | 38 | 63 | A |
| 1 + 0 | 40 | | | 85 | | | 100 | | | 100 | | | 95 | | | 95 | | | 65 | | | 45 | | | 43 | | |
| 1 + 1/2 | 43 | 40 | S | 90 | 95 | A | 93 | 100 | A | 98 | 100 | A | 93 | 96 | A | 90 | 99 | A | 83 | 69 | S | 53 | 60 | A | 45 | 56 | A |
| 1 + 1 | 48 | 46 | S | 93 | 95 | A | 98 | 100 | A | 95 | 100 | A | 90 | 97 | A | 88 | 99 | A | 73 | 70 | S | 58 | 59 | A | 55 | 57 | A |
| 1 + 2 | 55 | 67 | A | 93 | 97 | A | 98 | 100 | A | 98 | 100 | A | 93 | 97 | A | 90 | 100 | A | 60 | 76 | A | 53 | 66 | A | 53 | 60 | A |
| 1 + 3 | 55 | 76 | A | 90 | 98 | A | 100 | 100 | AD | 98 | 100 | A | 95 | 98 | A | 95 | 100 | A | 73 | 79 | A | 70 | 75 | A | 73 | 74 | A |
| 2 + 0 | 50 | | | 93 | | | 100 | | | 93 | | | 90 | | | 90 | | | 83 | | | 70 | | | 64 | | |
| 2 + 1/2 | 50 | 50 | AD | 93 | 98 | A | 100 | 100 | AD | 100 | 98 | S | 98 | 93 | S | 98 | 98 | AD | 95 | 85 | S | 78 | 78 | AD | 75 | 73 | S |
| 2 + 1 | 55 | 55 | AD | 95 | 98 | A | 100 | 100 | AD | 100 | 98 | S | 98 | 93 | S | 93 | 98 | A | 100 | 86 | S | 75 | 78 | A | 75 | 74 | S |
| 2 + 2 | 60 | 73 | A | 98 | 99 | A | 100 | 100 | AD | 100 | 99 | S | 100 | 94 | S | 100 | 99 | S | 100 | 88 | S | 85 | 81 | S | 90 | 76 | S |
| 2 + 3 | 70 | 80 | A | 95 | 100 | A | 100 | 100 | AD | 100 | 99 | S | 100 | 96 | S | 100 | 100 | AD | 95 | 90 | S | 85 | 87 | S | 88 | 84 | S |

TABLE 4

Pre-emergence = S-benzyl dipropylthiolcarbamate + 1,3-dimethyl-3-(2-benzothiazolyl)urea

Percent Growth Control

| kg/ha | BDSW O | BDSW E | BDSW R | ISLW* O | ISLW* E | ISLW* R | SBTM O | SBTM E | SBTM R | FUM O | FUM E | FUM R | POP O | POP E | POP R | MARE O | MARE E | MARE R | WO O | WO E | WO R | PBRO O | PBRO E | PBRO R |
|---|---|---|---|---|---|---|---|---|---|---|---|---|---|---|---|---|---|---|---|---|---|---|---|---|
| 0 + 0 | 0 | | | | | | 0 | | | 0 | | | 0 | | | 0 | | | 0 | | | 0 | | |
| 0 + 1/2 | 0 | | | | | | 0 | | | 0 | | | 0 | | | 0 | | | 0 | | | 0 | | |
| 0 + 1 | 0 | | | | | | 0 | | | 0 | | | 0 | | | 0 | | | 0 | | | 0 | | |
| 0 + 2 | 0 | | | | | | 23 | | | 0 | | | 13 | | | 0 | | | 0 | | | 0 | | |
| 0 + 3 | 0 | | | | | | 28 | | | 0 | | | 0 | | | 0 | | | 0 | | | 0 | | |
| 1/4 + 0 | 0 | | | | | | 0 | | | 0 | | | 0 | | | 0 | | | 43 | | | 15 | | |
| 1/4 + 1/2 | 0 | 0 | AD | | | | 0 | 0 | AD | 0 | 0 | AD | 0 | 0 | AD | 0 | 0 | AD | 38 | 43 | A | 18 | 15 | S |
| 1/4 + 1 | 0 | 0 | AD | | | | 0 | 0 | AD | 0 | 0 | AD | 0 | 0 | AD | 0 | 0 | AD | 50 | 43 | S | 15 | 15 | AD |
| 1/4 + 2 | 0 | 0 | AD | | | | 38 | 23 | S | 0 | 0 | AD | 0 | 13 | A | 0 | 0 | AD | 33 | 43 | A | 35 | 15 | S |
| 1/4 + 3 | 10 | 0 | S | | | | 65 | 28 | S | 0 | 0 | AD | 20 | 0 | S | 25 | 0 | S | 58 | 43 | S | 43 | 15 | S |
| 1/2 + 0 | 0 | | | | | | 10 | | | 0 | | | 0 | | | 0 | | | 55 | | | 45 | | |
| 1/2 + 1/2 | 20 | 0 | S | | | | 35 | 10 | S | 0 | 0 | AD | 0 | 0 | AD | 0 | 0 | AD | 53 | 55 | A | 45 | 45 | AD |
| 1/2 + 1 | 20 | 0 | S | | | | 58 | 10 | S | 0 | 0 | AD | 10 | 0 | S | 40 | 0 | S | 68 | 55 | S | 58 | 45 | S |
| 1/2 + 2 | 10 | 0 | S | | | | 65 | 31 | S | 0 | 0 | AD | 20 | 13 | S | 58 | 0 | S | 68 | 55 | S | 60 | 45 | S |
| 1/2 + 3 | 28 | 0 | S | | | | 78 | 35 | S | 0 | 0 | AD | 20 | 0 | S | 38 | 0 | S | 73 | 55 | S | 80 | 45 | S |
| 1 + 0 | 40 | | | | | | 28 | | | 5 | | | 13 | | | 0 | | | 70 | | | 88 | | |
| 1 + 1/2 | 43 | 40 | S | | | | 45 | 28 | S | 0 | 5 | A | 10 | 13 | A | 0 | 0 | AD | 63 | 70 | A | 80 | 88 | A |
| 1 + 1 | 30 | 40 | A | | | | 60 | 28 | S | 0 | 5 | A | 30 | 13 | S | 23 | 0 | AD | 65 | 70 | A | 88 | 88 | AD |
| 1 + 2 | 40 | 40 | AD | | | | 73 | 45 | S | 10 | 5 | S | 25 | 24 | S | 80 | 0 | S | 68 | 70 | A | 85 | 88 | A |
| 1 + 3 | 48 | 40 | S | | | | 100 | 48 | S | 25 | 5 | S | 40 | 13 | S | 90 | 0 | S | 70 | 70 | AD | 90 | 88 | S |
| 2 + 0 | 45 | | | | | | 48 | | | 20 | | | 5 | | | 0 | | | 70 | | | 90 | | |
| 2 + 1/2 | 38 | 45 | A | | | | 78 | 48 | S | 23 | 20 | S | 30 | 5 | S | 33 | 0 | S | 75 | 70 | S | 90 | 90 | AD |
| 2 + 1 | 43 | 45 | A | | | | 75 | 48 | S | 10 | 20 | A | 23 | 5 | S | 38 | 0 | S | 70 | 70 | AD | 90 | 90 | AD |
| 2 + 2 | 48 | 45 | S | | | | 83 | 60 | S | 35 | 20 | S | 43 | 17 | S | 43 | 0 | S | 73 | 70 | S | 90 | 90 | AD |
| 2 + 3 | 45 | 45 | AD | | | | 100 | 63 | S | 30 | 20 | S | 48 | 5 | S | 70 | 0 | S | 70 | 70 | AD | 93 | 90 | S |

TABLE 4
(continued)
Percent Growth Control

| kg/ha | REED O | REED E | REED R | BKGR O | BKGR E | BKGR R | PRGR O | PRGR E | PRGR R | ABG O | ABG E | ABG R | WHFL O | WHFL E | WHFL R | BAIG O | BAIG E | BAIG R | RAJN O | RAJN E | RAJN R | MD O | MD E | MD R |
|---|---|---|---|---|---|---|---|---|---|---|---|---|---|---|---|---|---|---|---|---|---|---|---|---|
| 0 + 0 | 0 | | | 0 | | | 0 | | | 0 | | | 0 | | | 0 | | | 0 | | | 0 | | |
| 0 + 1/2 | 0 | | | 0 | | | 0 | | | 0 | | | 0 | | | 0 | | | 0 | | | 0 | | |
| 0 + 1 | 0 | | | 0 | | | 0 | | | 0 | | | 0 | | | 0 | | | 0 | | | 10 | | |
| 0 + 2 | 0 | | | 0 | | | 0 | | | 0 | | | 0 | | | 0 | | | 15 | | | 20 | | |
| 0 + 3 | 0 | | | 0 | | | 0 | | | 0 | | | 0 | | | 0 | | | 23 | | | 18 | | |
| 1/4 + 0 | 10 | | | 20 | | | 0 | | | 0 | | | 0 | | | 0 | | | 0 | | | 0 | | |
| 1/4 + 1/2 | 28 | 10 | S | 28 | 20 | S | 0 | 0 | AD | 0 | 0 | AD | 0 | 0 | AD | 0 | 0 | AD | 0 | 0 | AD | 0 | 0 | AD |
| 1/4 + 1 | 30 | 10 | S | 30 | 20 | S | 0 | 0 | AD | 0 | 0 | AD | 0 | 0 | AD | 0 | 0 | AD | 0 | 0 | AD | 10 | 10 | AD |
| 1/4 + 2 | 35 | 10 | S | 35 | 20 | S | 0 | 0 | AD | 0 | 0 | AD | 0 | 0 | AD | 0 | 0 | AD | 25 | 15 | S | 25 | 20 | S |
| 1/4 + 3 | 45 | 10 | S | 43 | 20 | S | 0 | 0 | AD | 0 | 0 | AD | 0 | 0 | AD | 0 | 0 | AD | 33 | 23 | S | 23 | 18 | S |
| 1/2 + 0 | 60 | | | 68 | | | 5 | | | 0 | | | 10 | | | 0 | | | 0 | | | 0 | | |
| 1/2 + 1/2 | 68 | 60 | S | 63 | 68 | A | 15 | 5 | S | 0 | 0 | AD | 5 | 10 | AD | 0 | 0 | AD | 0 | 0 | AD | 13 | 0 | S |
| 1/2 + 1 | 70 | 60 | S | 65 | 68 | A | 23 | 5 | S | 20 | 0 | S | 8 | 10 | A | 5 | 0 | S | 15 | 0 | S | 45 | 10 | S |
| 1/2 + 2 | 73 | 60 | S | 65 | 68 | A | 10 | 5 | S | 10 | 0 | S | 0 | 10 | A | 5 | 0 | S | 28 | 15 | S | 38 | 20 | S |
| 1/2 + 3 | 78 | 60 | S | 65 | 68 | A | 20 | 5 | S | 8 | 0 | S | 20 | 10 | S | 5 | 0 | S | 48 | 23 | S | 68 | 18 | S |
| 1 + 0 | 80 | | | 78 | | | 40 | | | 40 | | | 40 | | | 23 | | | 0 | | | 10 | | |
| 1 + 1/2 | 80 | 80 | AD | 78 | 78 | AD | 50 | 40 | S | 43 | 40 | S | 30 | 40 | A | 10 | 23 | A | 20 | 0 | S | 68 | 10 | S |
| 1 + 1 | 80 | 80 | AD | 83 | 78 | S | 55 | 40 | S | 40 | 40 | AD | 53 | 40 | S | 25 | 23 | S | 50 | 0 | S | 73 | 19 | S |
| 1 + 2 | 78 | 80 | A | 78 | 78 | AD | 63 | 40 | S | 38 | 40 | A | 43 | 40 | S | 20 | 23 | A | 83 | 15 | S | 90 | 28 | S |
| 1 + 3 | 83 | 80 | S | 80 | 78 | S | 60 | 40 | S | 45 | 40 | S | 63 | 40 | S | 28 | 23 | S | 75 | 23 | S | 93 | 26 | S |
| 2 + 0 | 88 | | | 88 | | | 68 | | | 53 | | | 70 | | | 33 | | | 40 | | | 38 | | |
| 2 + 1/2 | 90 | 88 | S | 88 | 88 | AD | 68 | 68 | AD | 53 | 53 | AD | 68 | 70 | A | 38 | 33 | S | 63 | 40 | S | 95 | 38 | S |
| 2 + 1 | 90 | 88 | S | 85 | 88 | A | 65 | 68 | A | 48 | 53 | A | 65 | 70 | A | 35 | 33 | S | 70 | 40 | S | 80 | 44 | S |
| 2 + 2 | 90 | 88 | S | 88 | 88 | AD | 63 | 68 | A | 55 | 53 | S | 70 | 70 | AD | 60 | 33 | S | 100 | 49 | S | 100 | 50 | S |
| 2 + 3 | 90 | 88 | S | 90 | 88 | S | 70 | 68 | S | 58 | 53 | 5 | 70 | 70 | AD | 43 | 33 | S | 78 | 54 | S | 100 | 49 | S |

TABLE 5

Pre-emergence = S-benzyl dipropylthiolcarbamate + N-(3-chloro-4-methoxyphenyl)-N,N-dimethylurea

Percent Growth Control

| kg/ha | BDSW | | | ILSW* | | | SBTM | | | FUM | | | POP | | | MARE | | | WO | | | PBRO | | |
|---|---|---|---|---|---|---|---|---|---|---|---|---|---|---|---|---|---|---|---|---|---|---|---|---|
| | O | E | R | O | E | R | O | E | R | O | E | R | O | E | R | O | E | R | O | E | R | O | E | R |
| 0 + 0 | 0 | | | | | | 0 | | | 0 | | | 0 | | | 0 | | | 0 | | | 0 | | |
| 0 + 1 | 40 | | | | | | 100 | | | 95 | | | 80 | | | 60 | | | 68 | | | 25 | | |
| 0 + 2 | 53 | | | | | | 100 | | | 100 | | | 100 | | | 78 | | | 68 | | | 38 | | |
| 0 + 3 | 58 | | | | | | 100 | | | 100 | | | 100 | | | 85 | | | 98 | | | 60 | | |
| 0 + 4 | 55 | | | | | | 100 | | | 100 | | | 100 | | | 90 | | | 100 | | | 60 | | |
| 1/4 + 0 | 45 | | | | | | 50 | | | 0 | | | 15 | | | 58 | | | 30 | | | 25 | | |
| 1/4 + 1 | 58 | 67 | A | | | | 100 | 100 | AD | 100 | 95 | S | 100 | 83 | S | 88 | 83 | S | 63 | 78 | A | 45 | 44 | S |
| 1/4 + 2 | 65 | 74 | A | | | | 100 | 100 | AD | 100 | 100 | AD | 100 | 100 | AD | 100 | 91 | S | 83 | 78 | S | 70 | 54 | S |
| 1/4 + 3 | 73 | 77 | A | | | | 100 | 100 | AD | 100 | 100 | AD | 100 | 100 | AD | 95 | 94 | S | 93 | 99 | A | 83 | 70 | S |
| 1/4 + 4 | 83 | 75 | S | | | | 100 | 100 | AD | 100 | 100 | AD | 100 | 100 | AD | 100 | 96 | S | 95 | 100 | A | 83 | 70 | S |
| 1/2 + 0 | 50 | | | | | | 30 | | | 0 | | | 0 | | | 90 | | | 58 | | | 53 | | |
| 1/2 + 1 | 70 | 70 | AD | | | | 100 | 100 | AD | 100 | 95 | S | 100 | 80 | S | 88 | 96 | A | 70 | 87 | A | 55 | 65 | A |
| 1/2 + 2 | 75 | 77 | A | | | | 100 | 100 | AD | 100 | 100 | AD | 100 | 100 | AD | 95 | 98 | A | 95 | 87 | S | 80 | 71 | S |
| 1/2 + 3 | 75 | 79 | A | | | | 100 | 100 | AD | 100 | 100 | AD | 100 | 100 | AD | 95 | 99 | A | 95 | 99 | A | 85 | 81 | S |
| 1/2 + 4 | 88 | 78 | S | | | | 100 | 100 | AD | 100 | 100 | AD | 100 | 100 | AD | 100 | 99 | S | 98 | 100 | A | 95 | 81 | S |
| 1 + 0 | 63 | | | | | | 80 | | | 63 | | | 70 | | | 35 | | | 83 | | | 90 | | |
| 1 + 1 | 65 | 78 | A | | | | 100 | 100 | AD | 100 | 98 | S | 100 | 94 | S | 100 | 74 | S | 93 | 95 | A | 98 | 93 | S |
| 1 + 2 | 75 | 83 | A | | | | 100 | 100 | AD | 100 | 100 | AD | 100 | 100 | AD | 100 | 86 | S | 95 | 95 | AD | 100 | 94 | S |
| 1 + 3 | 90 | 85 | S | | | | 100 | 100 | AD | 100 | 100 | AD | 100 | 100 | AD | 100 | 90 | S | 100 | 100 | AD | 100 | 96 | S |
| 1 + 4 | 88 | 83 | S | | | | 100 | 100 | AD | 100 | 100 | AD | 100 | 100 | AD | 100 | 94 | S | 100 | 100 | AD | 100 | 96 | S |
| 2 + 0 | 70 | | | | | | 68 | | | 100 | | | 75 | | | 63 | | | 90 | | | 100 | | |
| 2 + 1 | 95 | 82 | S | | | | 100 | 100 | AD | 100 | 100 | AD | 100 | 95 | S | 100 | 85 | S | 100 | 97 | S | 100 | 100 | AD |
| 2 + 2 | 80 | 86 | A | | | | 100 | 100 | AD | 100 | 100 | AD | 100 | 100 | AD | 100 | 92 | S | 100 | 97 | S | 100 | 100 | AD |
| 2 + 3 | 85 | 87 | A | | | | 100 | 100 | AD | 100 | 100 | AD | 100 | 100 | AD | 100 | 95 | S | 100 | 100 | AD | 100 | 100 | AD |
| 2 + 4 | 88 | 87 | S | | | | 100 | 100 | AD | 100 | 100 | AD | 100 | 100 | AD | 100 | 96 | S | 98 | 100 | AD | 100 | 100 | AD |

TABLE 5
(Continued)

| kg/ha | REED | | | BKGR | | | PRGR | | | ABG | | | WHFL | | | BAIG | | | RAJN | | | MD | | |
|---|---|---|---|---|---|---|---|---|---|---|---|---|---|---|---|---|---|---|---|---|---|---|---|---|
| | O | E | R | O | E | R | O | E | R | O | E | R | O | E | R | O | E | R | O | E | R | O | E | R |
| 0 + 0 | 0 | | | 0 | | | 0 | | | 0 | | | 0 | | | 0 | | | 0 | | | 0 | | |
| 0 + 1 | 100 | | | 80 | | | 58 | | | 40 | | | 40 | | | 30 | | | 100 | | | 95 | | |
| 0 + 2 | 100 | | | 80 | | | 83 | | | 65 | | | 55 | | | 48 | | | 100 | | | 100 | | |
| 0 + 3 | 100 | | | 80 | | | 88 | | | 70 | | | 58 | | | 68 | | | 100 | | | 100 | | |
| 0 + 4 | 100 | | | 75 | | | 93 | | | 60 | | | 60 | | | 60 | | | 100 | | | 100 | | |
| 1/4 + 0 | 20 | | | 18 | | | 0 | | | 0 | | | 0 | | | 0 | | | 0 | | | 45 | | |
| 1/4 + 1 | 100 | 100 | AD | 68 | 84 | A | 55 | 58 | A | 45 | 40 | S | 35 | 40 | A | 43 | 30 | S | 100 | 100 | AD | 100 | 97 | S |
| 1/4 + 2 | 95 | 100 | A | 75 | 84 | A | 83 | 83 | AD | 78 | 65 | S | 55 | 55 | AD | 68 | 48 | S | 100 | 100 | AD | 100 | 100 | AD |
| 1/4 + 3 | 100 | 100 | AD | 83 | 84 | A | 95 | 88 | S | 83 | 70 | S | 65 | 58 | S | 75 | 68 | S | 100 | 100 | AD | 100 | 100 | AD |
| 1/4 + 4 | 100 | 100 | AD | 88 | 80 | S | 100 | 93 | S | 100 | 60 | S | 78 | 60 | S | 88 | 60 | S | 100 | 100 | AD | 100 | 100 | AD |
| 1/2 + 0 | 65 | | | 60 | | | 20 | | | 20 | | | 13 | | | 5 | | | 55 | | | 80 | | |
| 1/2 + 1 | 85 | 100 | A | 83 | 92 | A | 60 | 66 | A | 43 | 52 | A | 40 | 48 | A | 30 | 34 | A | 100 | 100 | AD | 100 | 99 | S |
| 1/2 + 2 | 100 | 100 | AD | 93 | 92 | A | 98 | 86 | S | 85 | 72 | S | 45 | 61 | A | 53 | 51 | S | 100 | 100 | AD | 100 | 100 | AD |
| 1/2 + 3 | 100 | 100 | AD | 90 | 92 | A | 90 | 90 | AD | 65 | 76 | A | 60 | 63 | A | 78 | 70 | S | 100 | 100 | AD | 100 | 100 | AD |
| 1/2 + 4 | 100 | 100 | AD | 93 | 90 | S | 93 | 94 | ZA | 78 | 68 | S | 63 | 65 | A | 78 | 62 | S | 100 | 100 | AD | 100 | 100 | AD |
| 1 + 0 | 100 | | | 85 | | | 55 | | | 43 | | | 23 | | | 8 | | | 40 | | | 93 | | |
| 1 + 1 | 100 | 100 | AD | 90 | 97 | A | 78 | 81 | A | 85 | 66 | S | 53 | 54 | A | 55 | 36 | S | 100 | 100 | AD | 95 | 100 | A |
| 1 + 2 | 100 | 100 | AD | 93 | 97 | A | 85 | 93 | A | 95 | 80 | S | 65 | 65 | AD | 73 | 52 | S | 100 | 100 | AD | 100 | 100 | AD |
| 1 + 3 | 100 | 100 | AD | 90 | 97 | A | 93 | 95 | A | 83 | 83 | AD | 65 | 68 | A | 75 | 71 | S | 100 | 100 | AD | 100 | 100 | AD |
| 1 + 4 | 100 | 100 | AD | 95 | 96 | A | 95 | 97 | A | 85 | 77 | S | 70 | 69 | S | 73 | 63 | S | 100 | 100 | AD | 100 | 100 | AD |
| 2 + 0 | 100 | | | 95 | | | 93 | | | 73 | | | 43 | | | 13 | | | 65 | | | 100 | | |
| 2 + 1 | 100 | 100 | AD | 100 | 99 | S | 100 | 97 | S | 100 | 84 | S | 73 | 66 | S | 65 | 39 | S | 100 | 100 | AD | 100 | 100 | AD |
| 2 + 2 | 100 | 100 | AD | 95 | 99 | A | 95 | 99 | A | 90 | 91 | A | 70 | 74 | A | 73 | 55 | S | 100 | 100 | AD | 100 | 100 | AD |
| 2 + 3 | 100 | 100 | AD | 100 | 99 | S | 98 | 99 | S | 95 | 92 | S | 83 | 76 | S | 85 | 62 | S | 100 | 100 | AD | 100 | 100 | AD |
| 2 + 4 | 100 | 100 | AD | 100 | 99 | S | 100 | 100 | AD | 100 | 89 | S | 78 | 77 | S | 83 | 65 | S | 100 | 100 | AD | 100 | 100 | AD |

TABLE 6

Pre-emergence = S-benzyl dipropylthiolcarbamate + 1-n-butyl-3-(3,4-dichlorophenyl)-1-methylurea

Percent Growth Control

| kg/ha | BDSW | | | ILSW | | | SBTM | | | FUM | | | POP | | | MARE | | | WO | | | PBRO | | |
|---|---|---|---|---|---|---|---|---|---|---|---|---|---|---|---|---|---|---|---|---|---|---|---|---|
| | O | E | R | O | E | R | O | E | R | O | E | R | O | E | R | O | E | R | O | E | R | O | E | R |
| 0 + 0 | 0 | | | | | | 80 | | | | | | | | | 0 | | | 0 | | | 0 | | |
| 0 + 1 | 0 | | | | | | 100 | | | | | | | | | 75 | | | 0 | | | 0 | | |
| 0 + 2 | 0 | | | | | | 100 | | | | | | | | | 75 | | | 0 | | | 0 | | |
| 0 + 3 | 10 | | | | | | 100 | | | | | | | | | 40 | | | 0 | | | 0 | | |
| 0 + 4 | 10 | | | | | | 100 | | | | | | | | | 90 | | | 0 | | | 0 | | |
| 1/4 + 0 | 0 | | | | | | 70 | | | | | | | | | 0 | | | 23 | | | 5 | | |
| 1/4 + 1 | 0 | 0 | AD | | | | 100 | 100 | AD | | | | | | | 100 | 75 | S | 38 | 23 | S | 25 | 5 | S |
| 1/4 + 2 | 33 | 0 | S | | | | 100 | 100 | AD | | | | | | | 95 | 75 | S | 43 | 23 | S | 38 | 5 | S |
| 1/4 + 3 | 48 | 10 | S | | | | 98 | 100 | A | | | | | | | 80 | 90 | A | 45 | 23 | S | 30 | 5 | S |
| 1/4 + 4 | 33 | 10 | S | | | | 100 | 100 | AD | | | | | | | 100 | 90 | S | 40 | 23 | S | 20 | 5 | S |
| 1/2 + 0 | 33 | | | | | | 90 | | | | | | | | | 0 | | | 43 | | | 28 | | |
| 1/2 + 1 | 33 | 33 | AD | | | | 100 | 100 | AD | | | | | | | 95 | 75 | S | 48 | 43 | S | 35 | 28 | S |
| 1/2 + 2 | 50 | 33 | S | | | | 100 | 100 | AD | | | | | | | 100 | 75 | S | 63 | 43 | S | 58 | 28 | S |
| 1/2 + 3 | 40 | 40 | AD | | | | 100 | 100 | AD | | | | | | | 100 | 90 | S | 58 | 43 | S | 53 | 28 | S |
| 1/2 + 4 | 63 | 40 | S | | | | 100 | 100 | AD | | | | | | | 100 | 90 | S | 78 | 43 | S | 75 | 28 | S |
| 1 + 0 | 40 | | | | | | 100 | | | | | | | | | 60 | | | 85 | | | 93 | | |
| 1 + 1 | 43 | 40 | S | | | | 100 | 100 | AD | | | | | | | 95 | 90 | S | 88 | 85 | S | 93 | 93 | AD |
| 1 + 2 | 45 | 40 | S | | | | 100 | 100 | AD | | | | | | | 88 | 90 | A | 83 | 85 | A | 90 | 93 | A |
| 1 + 3 | 53 | 46 | S | | | | 100 | 100 | AD | | | | | | | 100 | 96 | S | 88 | 85 | A | 90 | 93 | A |
| 1 + 4 | 73 | 46 | S | | | | 100 | 100 | AD | | | | | | | 90 | 96 | A | 85 | 85 | AD | 93 | 93 | AD |
| 2 + 0 | 53 | | | | | | 98 | | | | | | | | | 40 | | | 90 | | | 95 | | |
| 2 + 1 | 55 | 53 | S | | | | 100 | 100 | AD | | | | | | | 100 | 85 | S | 90 | 90 | AD | 90 | 95 | A |
| 2 + 2 | 63 | 53 | S | | | | 98 | 100 | AD | | | | | | | 100 | 85 | S | 93 | 90 | A | 98 | 95 | S |
| 2 + 3 | 60 | 58 | S | | | | 100 | 100 | AD | | | | | | | 95 | 94 | S | 88 | 90 | A | 98 | 95 | S |
| 2 + 4 | 60 | 58 | S | | | | 100 | 100 | AD | | | | | | | 100 | 94 | S | 90 | 90 | AD | 98 | 95 | S |

TABLE 6
(Continued)

| kg/ha | REED | | | BKGR | | | PRGR | | | ABG | | | WHFL | | | BAIG | | | RAJN | | | MD | | |
|---|---|---|---|---|---|---|---|---|---|---|---|---|---|---|---|---|---|---|---|---|---|---|---|---|
| | 0 | E | R | O | E | R | O | E | R | O | E | R | O | E | R | O | E | R | O | E | R | O | E | R |
| 0 + 0 | 0 | | | 0 | | | 0 | | | 0 | | | 0 | | | 0 | | | 0 | | | 0 | | |
| 0 + 1 | 0 | | | 0 | | | 0 | | | 0 | | | 0 | | | 0 | | | 0 | | | 0 | | |
| 0 + 2 | 30 | | | 0 | | | 0 | | | 0 | | | 0 | | | 0 | | | 23 | | | 10 | | |
| 0 + 3 | 60 | | | 0 | | | 0 | | | 0 | | | 0 | | | 0 | | | 33 | | | 20 | | |
| 0 + 4 | 40 | | | 0 | | | 0 | | | 0 | | | 0 | | | 0 | | | 30 | | | 25 | | |
| 1/4 + 0 | 40 | | | 40 | | | 0 | | | 0 | | | 0 | | | 0 | | | 0 | | | 0 | | |
| 1/4 + 1 | 48 | 40 | S | 35 | 40 | A | 10 | 0 | S | 0 | 0 | AD | 0 | 0 | AD | 0 | 0 | AD | 13 | 0 | S | 18 | 0 | S |
| 1/4 + 2 | 73 | 58 | S | 50 | 40 | S | 20 | 0 | S | 0 | 0 | AD | 13 | 0 | S | 0 | 0 | AD | 43 | 23 | S | 30 | 10 | S |
| 1/4 + 3 | 90 | 76 | S | 68 | 40 | S | 28 | 0 | S | 0 | 0 | AD | 0 | 0 | AD | 0 | 0 | AD | 43 | 23 | S | 40 | 20 | S |
| 1/4 + 4 | 90 | 64 | S | 50 | 40 | S | 35 | 0 | S | 10 | 0 | S | 0 | 0 | AD | 0 | 0 | AD | 45 | 30 | S | 68 | 25 | S |
| 1/2 + 0 | 45 | | | 48 | | | 23 | | | 0 | | | 8 | | | 0 | | | 0 | | | 5 | | |
| 1/2 + 1 | 73 | 45 | S | 60 | 48 | S | 25 | 23 | S | 0 | 0 | AD | 18 | 8 | S | 5 | 0 | S | 18 | 0 | S | 23 | 5 | S |
| 1/2 + 2 | 80 | 62 | S | 63 | 48 | S | 35 | 23 | S | 23 | 0 | S | 5 | 8 | A | 0 | 0 | AD | 50 | 23 | S | 45 | 15 | S |
| 1/2 + 3 | 88 | 78 | S | 73 | 48 | S | 43 | 23 | S | 13 | 0 | S | 10 | 8 | S | 0 | 0 | AD | 60 | 33 | S | 53 | 24 | S |
| 1/2 + 4 | 93 | 67 | S | 83 | 48 | S | 63 | 23 | S | 50 | 0 | S | 0 | 8 | A | 0 | 0 | AD | 53 | 30 | S | 30 | 29 | S |
| 1 + 0 | 95 | | | 80 | | | 55 | | | 50 | | | 25 | | | 0 | | | 10 | | | 30 | | |
| 1 + 1 | 100 | 95 | S | 85 | 80 | S | 43 | 55 | A | 43 | 50 | A | 43 | 25 | S | 8 | 0 | S | 18 | 10 | S | 28 | 30 | A |
| 1 + 2 | 100 | 97 | S | 85 | 80 | S | 73 | 55 | S | 50 | 50 | AD | 10 | 25 | A | 0 | 0 | AD | 38 | 31 | S | 38 | 37 | S |
| 1 + 3 | 100 | 98 | S | 85 | 80 | S | 80 | 55 | S | 65 | 50 | S | 10 | 25 | A | 10 | 0 | S | 35 | 40 | A | 35 | 44 | A |
| 1 + 4 | 100 | 97 | S | 90 | 80 | S | 83 | 55 | S | 43 | 50 | A | 23 | 25 | A | 18 | 0 | S | 90 | 37 | S | 93 | 48 | S |
| 2 + 0 | 100 | | | 85 | | | 75 | | | 50 | | | 43 | | | 20 | | | 38 | | | 30 | | |
| 2 + 1 | 100 | 100 | AD | 93 | 85 | S | 93 | 75 | S | 68 | 50 | S | 43 | 43 | AD | 28 | 20 | S | 95 | 38 | S | 95 | 30 | S |
| 2 + 2 | 100 | 100 | AD | 90 | 85 | S | 83 | 75 | S | 60 | 50 | S | 43 | 43 | AD | 18 | 20 | A | 85 | 52 | S | 95 | 37 | S |
| 2 + 3 | 100 | 100 | AD | 93 | 85 | S | 85 | 75 | S | 80 | 50 | S | 35 | 43 | A | 20 | 20 | AD | 98 | 59 | S | 98 | 44 | S |
| 2 + 4 | 100 | 100 | AD | 98 | 85 | S | 88 | 75 | S | 80 | 50 | S | 60 | 43 | S | 48 | 20 | S | 95 | 57 | S | 93 | 48 | S |

TABLE 7

Pre-emergence = S-benzyl dipropylthiolcarbamate + 2-t-butylamino-4-ethylamino-6-methylthio-s-triazine

Percent Growth Control

| | BDSW | | | ILSW* | | | SBTM | | | FUM | | | POP | | | MARE | | | WO | | | PBRO | | |
|---|---|---|---|---|---|---|---|---|---|---|---|---|---|---|---|---|---|---|---|---|---|---|---|---|
| kg/ha | O | E | R | O | E | R | O | E | R | O | E | R | O | E | R | O | E | R | O | E | R | O | E | R |
| 0 + 0 | 0 | | | 0 | | | 10 | | | 0 | | | | | | 0 | | | 0 | | | 0 | | |
| 0 + 1/2 | 0 | | | 0 | | | 100 | | | 25 | | | | | | 18 | | | 10 | | | 8 | | |
| 0 + 1 | 0 | | | 0 | | | 100 | | | 8 | | | | | | 50 | | | 10 | | | 13 | | |
| 0 + 2 | 0 | | | 0 | | | 100 | | | 20 | | | | | | 25 | | | 40 | | | 30 | | |
| 0 + 3 | 0 | | | 0 | | | 100 | | | 23 | | | | | | 63 | | | 50 | | | 43 | | |
| 1/4 + 0 | 10 | | | 0 | | | 0 | | | 0 | | | | | | 0 | | | 48 | | | 38 | | |
| 1/4 + 1/2 | 28 | 10 | S | 0 | 0 | AD | 85 | 100 | A | 25 | 25 | AD | | | | 68 | 18 | S | 45 | 53 | A | 43 | 43 | AD |
| 1/4 + 1 | 28 | 10 | S | 25 | 0 | S | 100 | 100 | AD | 53 | 8 | S | | | | 65 | 50 | S | 55 | 53 | S | 55 | 46 | S |
| 1/4 + 2 | 25 | 10 | S | 20 | 0 | S | 100 | 100 | AD | 40 | 20 | S | | | | 55 | 25 | S | 50 | 69 | A | 53 | 57 | A |
| 1/4 + 3 | 35 | 10 | S | 20 | 0 | S | 100 | 100 | AD | 50 | 23 | S | | | | 73 | 63 | S | 55 | 74 | A | 63 | 65 | A |
| 1/2 + 0 | 43 | | | 60 | | | 100 | | | 20 | | | | | | 0 | | | 70 | | | 85 | | |
| 1/2 + 1/2 | 38 | 43 | A | 20 | 60 | A | 100 | 100 | AD | 65 | 40 | S | | | | 40 | 18 | S | 68 | 73 | A | 70 | 86 | A |
| 1/2 + 1 | 35 | 43 | A | 25 | 60 | A | 100 | 100 | AD | 80 | 26 | S | | | | 70 | 50 | S | 60 | 73 | A | 65 | 87 | A |
| 1/2 + 2 | 30 | 43 | A | - | 60 | - | 100 | 100 | AD | 30 | 36 | A | | | | 70 | 25 | S | 70 | 82 | A | 85 | 90 | A |
| 1/2 + 3 | 28 | 43 | A | - | 60 | - | 100 | 100 | AD | 63 | 38 | S | | | | 60 | 63 | A | 75 | 85 | A | 88 | 92 | A |
| 1 + 0 | 40 | | | - | - | - | 100 | | | 58 | | | | | | 0 | | | 80 | | | 93 | | |
| 1 + 1/2 | 35 | 40 | A | - | - | - | 100 | 100 | AD | 63 | 69 | A | | | | 58 | 18 | S | 70 | 82 | A | 85 | 94 | A |
| 1 + 1 | 43 | 40 | S | - | - | - | 100 | 100 | AD | 70 | 61 | S | | | | 68 | 50 | S | 75 | 82 | A | 88 | 94 | A |
| 1 + 2 | 35 | 40 | A | - | - | - | 100 | 100 | AD | 68 | 66 | S | | | | 90 | 25 | S | 70 | 88 | A | 88 | 95 | A |
| 1 + 3 | 45 | 40 | S | - | - | - | 100 | 100 | AD | 80 | 68 | S | | | | 83 | 63 | S | 80 | 90 | A | 95 | 96 | A |
| 2 + 0 | 45 | | | - | - | - | 100 | | | 25 | | | | | | 75 | | | 78 | | | 90 | | |
| 2 + 1/2 | 45 | 45 | AD | - | - | - | 100 | 100 | AD | 85 | 44 | S | | | | 83 | 80 | S | 85 | 80 | S | 95 | 91 | S |
| 2 + 1 | 45 | 45 | AD | - | - | - | 100 | 100 | AD | 90 | 31 | S | | | | 88 | 88 | AD | 78 | 80 | A | 98 | 91 | S |
| 2 + 2 | 45 | 45 | AD | - | - | - | 100 | 100 | AD | 100 | 40 | S | | | | 90 | 81 | S | 78 | 87 | A | 95 | 93 | S |
| 2 + 3 | 58 | 45 | S | - | - | - | 100 | 100 | AD | 100 | 38 | S | | | | 98 | 91 | S | 88 | 89 | A | 100 | 44 | S |

TABLE 7
(Continued)

| kg/ha | REED O | REED E | REED R | BKGR O | BKGR E | BKGR R | PRGR O | PRGR E | PRGR R | ABG O | ABG E | ABG R | WHFL O | WHFL E | WHFL R | BAIG O | BAIG E | BAIG R | RAJN O | RAJN E | RAJN R | MD O | MD E | MD R |
|---|---|---|---|---|---|---|---|---|---|---|---|---|---|---|---|---|---|---|---|---|---|---|---|---|
| 0 + 0 | 0 | | | 0 | | | 0 | | | 0 | | | 0 | | | 0 | | | 0 | | | 0 | | |
| 0 + 1/2 | 40 | | | 25 | | | 25 | | | 0 | | | 10 | | | 0 | | | 0 | | | 0 | | |
| 0 + 1 | 45 | | | 38 | | | 28 | | | 23 | | | 18 | | | 0 | | | 0 | | | 63 | | |
| 0 + 2 | 40 | | | 40 | | | 40 | | | 30 | | | 20 | | | 20 | | | 5 | | | 60 | | |
| 0 + 3 | 43 | | | 40 | | | 33 | | | 30 | | | 23 | | | 23 | | | 55 | | | 95 | | |
| 1/4 + 0 | 70 | | | 70 | | | 0 | | | 0 | | | 0 | | | 0 | | | 0 | | | 0 | | |
| 1/4 + 1/2 | 63 | 82 | A | 55 | 78 | A | 40 | 25 | S | 43 | 0 | S | 0 | 10 | A | 10 | 0 | S | 20 | 0 | S | 30 | 0 | S |
| 1/4 + 1 | 45 | 84 | A | 50 | 81 | A | 40 | 28 | S | 40 | 23 | S | 10 | 18 | A | 5 | 0 | S | 33 | 0 | S | 75 | 63 | S |
| 1/4 + 2 | 43 | 82 | A | 45 | 82 | A | 35 | 40 | A | 33 | 30 | S | 10 | 20 | A | 8 | 20 | A | 50 | 5 | S | 93 | 60 | S |
| 1/4 + 3 | 63 | 83 | A | 45 | 82 | A | 38 | 33 | S | 38 | 30 | S | 25 | 23 | S | 10 | 23 | A | 95 | 55 | S | 95 | 95 | AD |
| 1/2 + 0 | 83 | | | 75 | | | 45 | | | 45 | | | 28 | | | 13 | | | 0 | | | 0 | | |
| 1/2 + 1/2 | 68 | 90 | A | 63 | 81 | A | 25 | 59 | A | 23 | 45 | A | 0 | 35 | A | 0 | 13 | A | 30 | 0 | S | 100 | 0 | S |
| 1/2 + 1 | 68 | 91 | A | 63 | 85 | A | 35 | 60 | A | 30 | 58 | A | 18 | 41 | A | 18 | 13 | S | 28 | 0 | S | 100 | 63 | S |
| 1/2 + 2 | 70 | 90 | A | 70 | 85 | A | 43 | 67 | A | 45 | 62 | A | 5 | 42 | A | 5 | 30 | A | 90 | 5 | S | 100 | 60 | S |
| 1/2 + 3 | 78 | 90 | A | 70 | 85 | A | 43 | 63 | A | 40 | 62 | A | 18 | 45 | A | 5 | 33 | A | 95 | 55 | S | 100 | 95 | S |
| 1 + 0 | 88 | | | 83 | | | 55 | | | 45 | | | 63 | | | 28 | | | 25 | | | 33 | | |
| 1 + 1/2 | 70 | 93 | A | 65 | 87 | A | 40 | 66 | A | 43 | 45 | A | 20 | 67 | A | 5 | 28 | A | 28 | 25 | S | 98 | 33 | S |
| 1 + 1 | 75 | 93 | A | 70 | 90 | A | 43 | 68 | A | 43 | 58 | A | 40 | 70 | A | 10 | 28 | A | 95 | 25 | S | 100 | 75 | S |
| 1 + 2 | 70 | 93 | A | 65 | 90 | A | 48 | 73 | A | 45 | 62 | A | 25 | 70 | A | 18 | 42 | A | 100 | 29 | S | 100 | 73 | S |
| 1 + 3 | 88 | 93 | A | 80 | 90 | A | 68 | 70 | A | 63 | 62 | S | 58 | 72 | A | 48 | 45 | S | 100 | 66 | S | 100 | 97 | S |
| 2 + 0 | 95 | | | 90 | | | 80 | | | 75 | | | 70 | | | 55 | | | 15 | | | 40 | | |
| 2 + 1/2 | 93 | 97 | A | 85 | 93 | A | 75 | 85 | A | 73 | 75 | A | 83 | 73 | S | 58 | 55 | S | 100 | 15 | S | 100 | 40 | S |
| 2 + 1 | 93 | 97 | A | 78 | 94 | A | 65 | 86 | A | 60 | 81 | A | 75 | 75 | AD | 60 | 55 | S | 95 | 15 | S | 100 | 78 | S |
| 2 + 2 | 88 | 97 | A | 83 | 94 | A | 70 | 88 | A | 55 | 83 | A | 40 | 76 | A | 35 | 64 | A | 100 | 19 | S | 100 | 76 | S |
| 2 + 3 | 95 | 97 | A | 90 | 94 | A | 73 | 87 | A | - | 83 | - | 80 | 77 | S | 78 | 65 | S | 100 | 62 | S | 100 | 97 | S |

TABLE 8

Pre-emergence = S-benzyl dipropylthiolcarbamate + S-2,3,3-trichloroallyl-diisopropyl thiolcarbamate

Percent Growth Control

| kg/ha | BDSW O | BDSW E | BDSW R | ILSW O | ILSW E | ILSW R | SBTM O | SBTM E | SBTM R | FUM O | FUM E | FUM R | POP O | POP E | POP R | MARE O | MARE E | MARE R | WO O | WO E | WO R | PBRO O | PBRO E | PBRO R |
|---|---|---|---|---|---|---|---|---|---|---|---|---|---|---|---|---|---|---|---|---|---|---|---|---|
| 0 + 0 | 0 | | | 0 | | | 0 | | | 0 | | | 0 | | | 0 | | | 0 | | | 0 | | |
| 0 + 1/8 | 0 | | | 0 | | | 0 | | | 0 | | | 0 | | | 0 | | | 40 | | | 20 | | |
| 0 + 1/4 | 0 | | | 0 | | | 0 | | | 0 | | | 0 | | | 0 | | | 75 | | | 75 | | |
| 0 + 1/2 | 0 | | | 0 | | | 0 | | | 0 | | | 0 | | | 0 | | | 75 | | | 88 | | |
| 0 + 1 | 25 | | | 43 | | | 0 | | | 0 | | | 0 | | | 0 | | | 83 | | | 98 | | |
| 1/4 + 0 | 0 | | | 0 | | | 0 | | | 0 | | | 0 | | | 0 | | | 58 | | | 10 | | |
| 1/4 + 1/8 | 13 | 0 | S | 10 | 0 | S | 10 | 0 | S | 0 | 0 | AD | 0 | 0 | AD | 0 | 0 | AD | 83 | 75 | S | 83 | 28 | S |
| 1/4 + 1/4 | 20 | 0 | S | 35 | 0 | S | 15 | 0 | S | 0 | 0 | AD | 10 | 0 | S | 0 | 0 | AD | 93 | 90 | S | 93 | 78 | S |
| 1/4 + 1/2 | 38 | 0 | S | 43 | 0 | S | 8 | 0 | S | 0 | 0 | AD | 0 | 0 | AD | 0 | 0 | AD | 95 | 90 | S | 100 | 89 | S |
| 1/4 + 1 | 40 | 25 | S | 40 | 43 | A | 5 | 0 | S | 0 | 0 | AD | 0 | 0 | AD | 0 | 0 | AD | 93 | 93 | AD | 95 | 98 | A |
| 1/2 + 0 | 30 | | | 25 | | | 0 | | | 0 | | | 0 | | | 0 | | | 60 | | | 20 | | |
| 1/2 + 1/8 | 30 | 30 | AD | 30 | 25 | S | 13 | 0 | S | 0 | 0 | AD | 0 | 0 | AD | 0 | 0 | AD | 80 | 76 | S | 75 | 36 | S |
| 1/2 + 1/4 | 35 | 30 | S | 38 | 25 | S | 0 | 0 | AD | 0 | 0 | AD | 0 | 0 | AD | 0 | 0 | AD | 90 | 90 | AD | 85 | 80 | S |
| 1/2 + 1/2 | 43 | 30 | S | 55 | 25 | S | 0 | 0 | AD | - | - | - | 0 | 0 | AD | 0 | 0 | AD | 95 | 90 | S | 95 | 90 | S |
| 1/2 + 1 | 43 | 48 | A | 68 | 57 | S | 10 | 0 | S | 30 | 0 | S | 35 | 0 | S | 0 | 0 | AD | 93 | 93 | AD | 100 | 98 | S |
| 1 + 0 | 35 | | | 40 | | | 5 | | | 0 | | | 0 | | | 0 | | | 93 | | | 80 | | |
| 1 + 1/8 | 43 | 35 | S | 45 | 40 | S | 10 | 5 | S | 0 | 0 | AD | 0 | 0 | AD | 0 | 0 | AD | 83 | 96 | A | 90 | 84 | S |
| 1 + 1/4 | 35 | 35 | AD | 25 | 40 | A | 0 | 5 | A | 0 | 0 | AD | 10 | 0 | S | 0 | 0 | AD | 83 | 98 | A | 85 | 95 | A |
| 1 + 1/2 | 40 | 35 | S | 40 | 40 | AD | 10 | 5 | S | 0 | 0 | AD | 10 | 0 | S | 0 | 0 | AD | 93 | 98 | A | 95 | 98 | A |
| 1 + 1 | 35 | 51 | A | 65 | 66 | A | 18 | 5 | 3 | - | - | - | 80 | 0 | S | 0 | 0 | AD | 93 | 99 | A | 100 | 100 | AD |
| 2 + 0 | 33 | | | 43 | | | 33 | | | - | | | 43 | | | 10 | | | 90 | | | 98 | | |
| 2 + 1/8 | 35 | 33 | S | 50 | 43 | S | 33 | 33 | AD | 40 | - | - | 80 | 43 | S | 0 | 10 | A | 95 | 94 | A | 85 | 98 | A |
| 2 + 1/4 | 35 | 33 | S | 43 | 43 | AD | 35 | 33 | S | - | - | - | 65 | 43 | S | 0 | 10 | A | 90 | 98 | A | 95 | 100 | A |
| 2 + 1/2 | 35 | 33 | S | 95 | 43 | S | 50 | 33 | S | - | - | - | 45 | 43 | S | 35 | 10 | S | 95 | 98 | A | 95 | 100 | A |
| 2 + 1 | 43 | 50 | A | 90 | 68 | A | 40 | 33 | S | 0 | - | - | 75 | 43 | S | 0 | 10 | A | 95 | 98 | A | 100 | 100 | AD |

TABLE 8
(Continued)

| kg/ha | REED O | REED E | REED R | BKGR O | BKGR E | BKGR R | PRGR O | PRGR E | PRGR R | ABG O | ABG E | ABG R | WHFL O | WHFL E | WHFL R | BAIG O | BAIG E | BAIG R | RAJN O | RAJN E | RAJN R | MD O | MD E | MD R | SBTM O | SBTM E | SBTM R |
|---|---|---|---|---|---|---|---|---|---|---|---|---|---|---|---|---|---|---|---|---|---|---|---|---|---|---|---|
| 0 + 0 | 0 | | | 0 | | | 0 | | | 0 | | | 0 | | | 0 | | | 0 | | | 0 | | | 0 | | |
| 0 + 1/8 | 0 | | | 18 | | | 0 | | | 0 | | | 0 | | | 0 | | | 0 | | | 0 | | | 0 | | |
| 0 + 1/4 | 0 | | | 30 | | | 0 | | | 0 | | | 10 | | | 0 | | | 0 | | | 0 | | | 0 | | |
| 0 + 1/2 | 23 | | | 53 | | | 8 | | | 20 | | | 20 | | | 10 | | | 0 | | | 0 | | | 0 | | |
| 0 + 1 | 60 | | | 75 | | | 33 | | | 38 | | | 58 | | | 5 | | | 0 | | | 0 | | | 0 | | |
| 1/4 + 0 | 33 | | | 70 | | | 10 | | | 0 | | | 0 | | | 5 | | | 0 | | | 0 | | | 25 | | |
| 1/4 + 1/8 | 45 | 33 | S | 63 | 75 | A | 5 | 10 | A | 10 | 0 | S | 0 | 0 | AD | 0 | 5 | A | 0 | 0 | AD | 0 | 0 | AD | 10 | 25 | A |
| 1/4 + 1/4 | 58 | 33 | S | 73 | 79 | A | 23 | 10 | S | 33 | 0 | S | 20 | 10 | S | 0 | 5 | A | 0 | 0 | AD | 0 | 0 | AD | 13 | 25 | A |
| 1/4 + 1/2 | 75 | 48 | S | 88 | 86 | S | 15 | 17 | A | 33 | 20 | S | 43 | 20 | S | 10 | 15 | A | 5 | 0 | S | 0 | 0 | AD | 5 | 25 | A |
| 1/4 + 1 | 75 | 73 | S | 88 | 93 | A | 23 | 40 | A | 30 | 38 | A | 80 | 58 | S | 18 | 5 | S | 0 | 0 | AD | 0 | 0 | AD | 10 | 25 | A |
| 1/2 + 0 | 50 | | | 78 | | | 13 | | | 18 | | | 13 | | | 10 | | | 0 | | | 10 | | | 43 | | |
| 1/2 + 1/8 | 73 | 50 | S | 75 | 82 | A | 10 | 13 | A | 13 | 18 | A | 28 | 13 | S | 10 | 10 | AD | 0 | 0 | AD | 0 | 10 | A | 53 | 43 | S |
| 1/2 + 1/4 | 83 | 50 | S | 88 | 85 | S | 30 | 13 | S | 33 | 18 | S | 40 | 22 | S | 0 | 10 | A | 0 | 0 | AD | 0 | 10 | A | 25 | 43 | A |
| 1/2 + 1/2 | 88 | 62 | S | 90 | 90 | AD | 43 | 20 | S | 43 | 34 | S | 43 | 30 | S | 20 | 19 | S | 0 | 0 | AD | 0 | 10 | A | 38 | 43 | A |
| 1/2 + 1 | 88 | 80 | S | 93 | 95 | A | 48 | 42 | S | 40 | 49 | A | 55 | 63 | A | 25 | 15 | S | 10 | 0 | S | 23 | 10 | S | 43 | 43 | AD |
| 1 + 0 | 93 | | | 90 | | | 58 | | | 45 | | | 33 | | | 13 | | | 15 | | | 15 | | | 53 | | |
| 1 + 1/8 | 90 | 93 | A | 93 | 92 | S | 55 | 58 | A | 53 | 45 | S | 35 | 33 | S | 15 | 13 | S | 38 | 15 | S | 40 | 15 | S | 35 | 53 | A |
| 1 + 1/4 | 88 | 93 | A | 90 | 93 | A | 63 | 58 | S | 55 | 45 | S | 28 | 40 | A | 10 | 13 | A | 28 | 15 | S | 33 | 15 | S | 45 | 53 | A |
| 1 + 1/2 | 95 | 95 | AD | 95 | 95 | AD | 70 | 61 | S | 73 | 56 | S | 45 | 46 | A | 75 | 22 | S | 23 | 15 | S | 20 | 15 | S | 60 | 53 | S |
| 1 + 1 | 98 | 97 | S | 98 | 98 | AD | 83 | 72 | S | 83 | 66 | S | 60 | 72 | A | 35 | 17 | S | 28 | 15 | S | 25 | 15 | S | 50 | 53 | A |
| 2 + 0 | 90 | | | 90 | | | 80 | | | 70 | | | 40 | | | 28 | | | 38 | | | 43 | | | 43 | | |
| 2 + 1/8 | 93 | 90 | S | 95 | 92 | S | 78 | 80 | A | 78 | 70 | S | 23 | 40 | A | 5 | 28 | A | 40 | 38 | S | 40 | 43 | A | 45 | 43 | S |
| 2 + 1/4 | 95 | 90 | S | 95 | 93 | S | 73 | 80 | A | 73 | 70 | S | 50 | 46 | S | 23 | 28 | A | 43 | 38 | S | 43 | 43 | AD | 48 | 43 | S |
| 2 + 1/2 | 98 | 92 | S | 98 | 95 | S | 78 | 82 | A | 85 | 76 | S | 63 | 52 | S | 40 | 35 | S | 45 | 38 | S | 48 | 43 | S | 58 | 43 | S |
| 2 + 1 | 100 | 96 | S | 100 | 98 | S | 90 | 87 | S | 93 | 81 | S | 70 | 75 | A | 58 | 32 | S | 45 | 38 | S | 50 | 43 | S | 70 | 43 | S |

TABLE 9

Pre-emergence = S-benzyl dipropylthiolcarbamate + $\alpha,\alpha,\alpha$-trifluoro-2,6-dinitro-N,N-dipropyl-p-toluidine

Percent Growth Control

| kg/ha | BDSW | | | ILSW* | | | SBTM | | | FUM | | | POP | | | MARE | | | WO | | | PBRO | | |
|---|---|---|---|---|---|---|---|---|---|---|---|---|---|---|---|---|---|---|---|---|---|---|---|---|
| | O | E | R | O | E | R | O | E | R | O | E | R | O | E | R | O | E | R | O | E | R | O | E | R |
| 0 + 0 | 0 | | | 0 | | | 0 | | | 0 | | | 0 | | | 0 | | | 0 | | | 0 | | |
| 0 + 1/16 | 0 | | | 0 | | | 0 | | | 0 | | | 0 | | | 0 | | | 0 | | | 0 | | |
| 0 + 1/8 | 0 | | | 0 | | | – | | | 0 | | | 0 | | | 0 | | | 15 | | | 0 | | |
| 0 + 1/4 | 0 | | | 30 | | | – | | | 0 | | | 0 | | | 0 | | | 65 | | | 5 | | |
| 0 + 1/2 | 8 | | | 50 | | | – | | | 0 | | | 0 | | | 0 | | | 70 | | | 35 | | |
| 1/4 + 0 | 0 | | | 0 | | | 0 | | | 0 | | | 0 | | | 0 | | | 60 | | | 35 | | |
| 1/4 + 1/16 | 0 | 0 | AD | 10 | 0 | S | 0 | 0 | AD | 8 | 0 | S | 0 | 0 | AD | 0 | 0 | AD | 53 | 60 | A | 0 | 35 | A |
| 1/4 + 1/8 | 0 | 0 | AD | 13 | 0 | S | 0 | – | – | 0 | 0 | AD | 0 | 0 | AD | 0 | 0 | AD | 45 | 66 | A | 5 | 35 | A |
| 1/4 + 1/4 | 18 | 0 | S | 28 | 30 | A | 0 | – | – | 0 | 0 | AD | 0 | 0 | AD | 0 | 0 | AD | 60 | 86 | A | 30 | 38 | A |
| 1/4 + 1/2 | 55 | 8 | S | 70 | 50 | S | 0 | – | – | 0 | 0 | AD | 0 | 0 | AD | 0 | 0 | AD | 95 | 88 | S | 73 | 58 | S |
| 1/2 + 0 | 18 | | | 30 | | | 0 | | | 0 | | | 0 | | | 13 | | | 58 | | | 50 | | |
| 1/2 + 1/16 | 28 | 18 | S | 40 | 30 | S | 0 | – | – | 0 | 0 | AD | 0 | 0 | AD | 0 | 13 | A | 63 | 58 | S | 55 | 50 | S |
| 1/2 + 1/8 | 28 | 18 | S | 45 | 30 | S | 0 | – | – | 0 | 0 | AD | 0 | 0 | AD | 0 | 13 | A | 73 | 64 | S | 5 | 50 | S |
| 1/2 + 1/4 | 45 | 18 | S | 50 | 51 | A | 0 | – | – | 0 | 0 | AD | 0 | 0 | AD | 20 | 13 | S | 88 | 85 | S | 68 | 53 | S |
| 1/2 + 1/2 | 53 | 25 | S | 60 | 65 | A | 0 | – | – | 0 | 0 | AD | 0 | 0 | AD | 0 | 13 | A | 95 | 87 | S | 93 | 68 | S |
| 1 + 0 | 40 | | | 43 | | | 0 | | | 0 | | | 0 | | | 23 | | | 90 | | | 88 | | |
| 1 + 1/16 | 48 | 40 | S | 53 | 43 | S | 0 | 0 | AD | 0 | 0 | AD | 50 | 0 | S | 23 | 23 | AD | 93 | 90 | S | 93 | 88 | S |
| 1 + 1/8 | 43 | 40 | S | 50 | 43 | S | 0 | – | – | 5 | 0 | S | 15 | 0 | S | 0 | 23 | A | 93 | 92 | S | 93 | 88 | S |
| 1 + 1/4 | 53 | 40 | S | 45 | 60 | A | 0 | – | – | 8 | 0 | S | 20 | 0 | S | 0 | 23 | A | 98 | 97 | S | 98 | 89 | S |
| 1 + 1/2 | 60 | 45 | S | 60 | 72 | A | 0 | – | – | 25 | 0 | S | 30 | 0 | S | 28 | 23 | S | 98 | 97 | S | 98 | 92 | S |
| 2 + 0 | 43 | | | 60 | | | 50 | | | 100 | | | 30 | | | 0 | | | 83 | | | 93 | | |
| 2 + 1/16 | 45 | 43 | S | 50 | 60 | A | 0 | 50 | A | 8 | 100 | A | 48 | 30 | S | 28 | 8 | S | 93 | 83 | S | 95 | 93 | S |
| 2 + 1/8 | 55 | 43 | S | 70 | 60 | S | 0 | – | – | 25 | 100 | A | 53 | 30 | S | 58 | 0 | S | 95 | 86 | S | 93 | 93 | AD |
| 2 + 1/4 | 53 | 43 | S | 60 | 70 | A | 0 | – | – | 23 | 100 | A | 28 | 30 | A | 0 | 0 | AD | 90 | 94 | A | 95 | 93 | S |
| 2 + 1/2 | 58 | 48 | S | 80 | 80 | AD | 0 | – | – | 15 | 100 | A | 28 | 30 | A | 70 | 0 | S | 93 | 95 | A | 93 | 96 | A |

TABLE 9
(continued)

| kg/ha | REED O | REED E | REED R | BKGR O | BKGR E | BKGR R | PRGR O | PRGR E | PRGR R | ABG O | ABG E | ABG R | WHFL O | WHFL E | WHFL R | BAIG O | BAIG E | BAIG R | RAJN O | RAJN E | RAJN R | MD O | MD E | MD R | SBTM O | SBTM E | SBTM R |
|---|---|---|---|---|---|---|---|---|---|---|---|---|---|---|---|---|---|---|---|---|---|---|---|---|---|---|---|
| 0 + 0 | 0 | | | 0 | | | 0 | | | 0 | | | 0 | | | 0 | | | 0 | | | 0 | | | 0 | | |
| 0 + 1/16 | 55 | | | 43 | | | 10 | | | 43 | | | 0 | | | 0 | | | 0 | | | 0 | | | 0 | | |
| 0 + 1/8 | 98 | | | 80 | | | 65 | | | 85 | | | 8 | | | 0 | | | 0 | | | 0 | | | 0 | | |
| 0 + 1/4 | 100 | | | 100 | | | 95 | | | 100 | | | 25 | | | 20 | | | 0 | | | 0 | | | 0 | | |
| 0 + 1/2 | 100 | | | 100 | | | 100 | | | 100 | | | 35 | | | 20 | | | 0 | | | 0 | | | 0 | | |
| 1/4 + 0 | 50 | | | 63 | | | 0 | | | 0 | | | 0 | | | 0 | | | 0 | | | 0 | | | 0 | | |
| 1/4 + 1/16 | 80 | 78 | S | 80 | 79 | S | 48 | 10 | S | 90 | 43 | S | 0 | 0 | AD | 0 | 0 | AD | 0 | 0 | AD | 0 | 0 | AD | 0 | 0 | AD |
| 1/4 + 1/8 | 100 | 99 | S | 95 | 93 | S | 80 | 65 | S | 100 | 85 | S | 15 | 8 | S | 13 | 0 | S | 0 | 0 | AD | 0 | 0 | AD | 0 | 0 | AD |
| 1/4 + 1/4 | 100 | 100 | AD | 98 | 100 | A | 98 | 95 | S | 100 | 100 | AD | 28 | 25 | S | 15 | 20 | A | 0 | 0 | AD | 0 | 0 | AD | 0 | 0 | AD |
| 1/4 + 1/2 | 100 | 100 | AD | 100 | 100 | AD | 100 | 100 | AD | 100 | 100 | AD | 45 | 35 | S | 30 | 20 | S | 0 | 0 | AD | 0 | 0 | AD | 23 | 0 | S |
| 1/2 + 0 | 80 | | | 88 | | | 48 | | | 53 | | | 33 | | | 15 | | | 0 | | | 0 | | | 0 | | |
| 1/2 + 1/16 | 93 | 91 | S | 93 | 93 | AD | 73 | 53 | S | 83 | 73 | S | 5 | 33 | A | 5 | 15 | A | 0 | 0 | AD | 0 | 0 | AD | 23 | 0 | S |
| 1/2 + 1/8 | 100 | 100 | AD | 100 | 98 | S | 98 | 82 | S | 100 | 93 | S | 15 | 38 | A | 13 | 15 | A | 0 | 0 | AD | 0 | 0 | AD | 0 | 0 | AD |
| 1/2 + 1/4 | 100 | 100 | AD | 100 | 100 | AD | 100 | 97 | S | 100 | 100 | AD | 43 | 50 | A | 20 | 32 | A | 0 | 0 | AD | 0 | 0 | AD | 18 | 0 | S |
| 1/2 + 1/2 | 100 | 100 | AD | 100 | 100 | AD | 100 | 100 | AD | 100 | 100 | AD | 63 | 57 | S | 33 | 32 | S | 0 | 0 | AD | 0 | 0 | AD | 28 | 0 | S |
| 1 + 0 | 93 | | | 95 | | | 90 | | | 93 | | | 48 | | | 25 | | | 23 | | | 30 | | | 15 | | |
| 1 + 1/16 | 100 | 97 | S | 100 | 97 | S | 98 | 91 | S | 100 | 96 | S | 23 | 48 | A | 20 | 25 | A | 0 | 23 | A | 10 | 30 | A | 15 | 15 | AD |
| 1 + 1/8 | 100 | 100 | AD | 100 | 99 | S | 95 | 97 | A | 100 | 99 | S | 23 | 52 | A | 13 | 25 | A | 10 | 23 | A | 15 | 30 | A | 33 | 15 | S |
| 1 + 1/4 | 100 | 100 | AD | 100 | 100 | AD | 100 | 100 | AD | 100 | 100 | AD | 43 | 61 | A | 20 | 40 | A | 25 | 23 | S | 30 | 30 | AD | 43 | 15 | S |
| 1 + 1/2 | 100 | 100 | AD | 100 | 100 | AD | 100 | 100 | AD | 100 | 100 | AD | 40 | 66 | A | 20 | 40 | A | 18 | 23 | A | 25 | 30 | A | 45 | 15 | S |
| 2 + 0 | 98 | | | 98 | | | 98 | | | 95 | | | 43 | | | 38 | | | 20 | | | 30 | | | 35 | | |
| 2 + 1/16 | 100 | 99 | S | 100 | 99 | S | 98 | 98 | AD | 100 | 97 | S | 48 | 43 | S | 43 | 38 | S | 18 | 20 | A | 28 | 30 | A | 35 | 35 | AD |
| 2 + 1/8 | 100 | 100 | AD | 100 | 100 | AD | 100 | 99 | S | 100 | 99 | S | 43 | 48 | A | 50 | 38 | S | 25 | 20 | S | 30 | 30 | AD | 43 | 35 | S |
| 2 + 1/4 | 100 | 100 | AD | 100 | 100 | AD | 100 | 100 | AD | 100 | 100 | AD | 40 | 57 | A | 30 | 50 | A | 25 | 20 | S | 30 | 30 | AD | 40 | 35 | S |
| 2 + 1/2 | 100 | 100 | AD | 100 | 100 | AD | 100 | 100 | AD | 100 | 100 | AD | 70 | 63 | S | 48 | 50 | A | 28 | 20 | S | 38 | 30 | S | 53 | 35 | S |

The compositions of the present invention show synergistic activity as herbicides in controlling the growth of undesirable vegetation when applied to such vegetation in pre- or postemergence application. The compositions are generally embodied in formulations which contain inert or occasionally active ingredients or diluent carriers in addition to the active compounds. Examples of such ingredients or carriers are water, organic solvents, surface active agents, oil, water-in-oil emulsions, wetting agents, dispersing agents, and emulsifying agents. The herbicidal formulations generally take the form of wettable powders, solutions or emulsifiable concentrates.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substituted polyethylene glycols of relatively long chain length.

The herbicidal compositions can also be applied to the foliage in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

The most preferred formulations are emulsifiable concentrates which consist of an oil solution of the herbicide along with an emulsifying agent. Prior to use the concentrate is diluted with water to form a suspended emulsion of oil droplets. The emulsifiers used are usually a mixture of anionic and nonionic surfactants. Other additives such as spreading agents and stickers can be included in the emulsifiable concentrate.

The formulations described above can be applied to the vegetation sought to be controlled in any conventional manner either before or after the vegetation has emerged from the soil. The vegetation can be in any stage of development after emergence, ranging from seedlings to fully grown plants. Application can be achieved by any conventional technique such as the use of ground spraying equipment or aircraft-mounted sprayers. Various other application techniques will be apparent to one skilled in the pesticide art.

WHAT IS CLAIMED IS:

1. A synergistic herbicidal composition comprising a mixture of

(a) an herbicidally effective amount of a thiolcarbamate of the formula

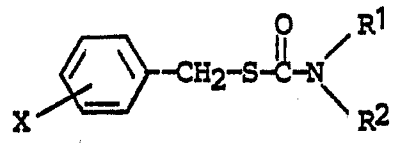

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a dimethyl urea compound of the formula

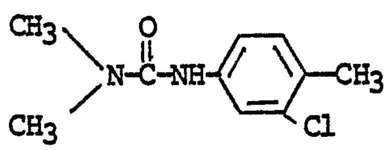

at a weight ratio of (a) to (b) of from about 0.01:1 to about 20:1.

2. The composition of Claim 1 wherein (a) is S-benzyl dipropyl thiolcarbamate and (b) N'-(3-chloro-4-methylphenyl)-N'N-dimethyl urea.

3. The composition of Claim 1 wherein (a) is S-benzyl ethyl, 1,2-dimethylpropyl thiolcarbamate and (b) is N'-(3-chloro-4-methylphenyl)-N'N-dimethyl urea.

4. The composition of Claim 1 wherein (a) is S-(2-chlorobenzyl)-N,N-diethyl thiolcarbamate and (b) is N'-(3-chloro-4-methylphenyl-N'N-dimethyl urea.

5. A synergistic herbicidal composition comprising a mixture of

(a) an herbicidally effective amount of a thiolcarbamate of the formula

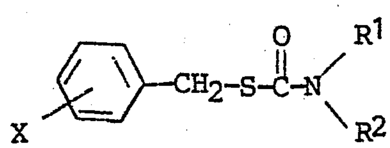

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of N-(4-isopropylphenyl)-N',N'-dimethylurea at a weight ratio of (a) to (b) of from about 0.01:1 to about 20:1.

6. A synergistic herbicidal composition comprising a mixture of (a) an herbicidally effective amount of a thiolcarbamate of the formula

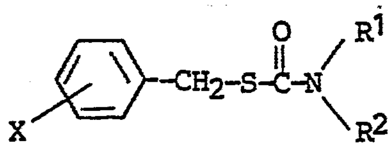

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of 3-(3,4-dichlorophenyl)-1-methoxy-1-methylurea at a weight ratio of (a) to (b) of from about 0.01:1 to about 20:1.

7. A synergistic herbicidal composition comprising a mixture of (a) an herbicidally effective amount of a thiolcarbamate of the formula

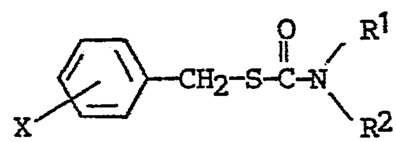

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of 1,3-dimethyl-3-(2-benzothiazolyl)urea at a weight ratio of (a) to (b) of from about 0.01:1 to about 20:1.

8. A synergistic herbicidal composition comprising a mixture of (a) an herbicidally effective amount of a thiolcarbamate of the formula

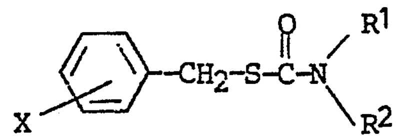

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of N-(3-chloro-4-methoxyphenyl)-N,N-dimethylurea at a weight ratio of (a) to (b) of from about 0.01:1 to about 20:1.

9. A synergistic herbicidal composition comprising a mixture of (a) an herbicidally effective amount of a thiolcarbamate of the formula

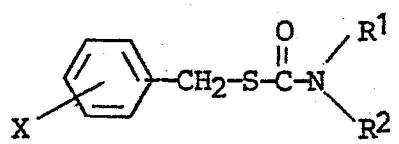

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of 1-n-butyl-3-(3,4-dichlorophenyl)-1-methylurea at a weight ratio of (a) to (b) of from about 0.01:1 to about 20:1.

10. A synergistic herbicidal composition comprising a mixture of

(a) an herbicidally effective amount of a thiolcarbamate of the formula

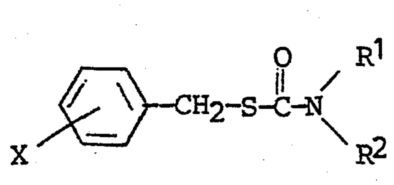

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of 2-t-butylamino-4-ethylamino-6-methylthio-s-triazine at a weight ratio of (a) to (b) of from about 0.01:1 to about 20:1.

11. A synergistic herbicidal composition comprising a mixture of

(a) an herbicidally effective amount of a thiolcarbamate of the formula

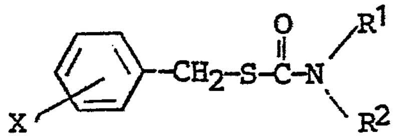

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of S-2,3,3-trichloroallyl-diisopropyl thiolcarbamate at a weight ratio of (a) to (b) of from about 0.01:1 to about 20:1.

12. A synergistic herbicidal composition comprising a mixture of

(a) an herbicidally effective amount of a thiolcarbamate of the formula

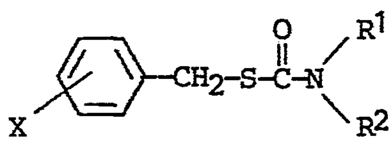

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of $\alpha,\alpha,\alpha$-trifluoro-2,6-dinitro-N,N-dipropyl-p-toluidine at a weight ratio of (a) to (b) of from about 0.01:1 to about 20:1.

13. A composition according to Claims 1, 2, 3, 4, 5, 6, 7, 8, 9 10, 11 or 12 in which the weight ratio of (a) to (b) is from about 0.1:1 to about 10:1.

14. A composition according to Claims 1, 2, 3, 4, 5, 6, 7, 8, 9 10, 11 or 12 in which the weight ratio of (a) to (b) is from about 0.1:1 to about 5:1.

15. A method of controlling undesirable vegetation which comprises the pre-emergence application or postemergence application to said vegetation of a herbicidal composition comprising a mixture of

(a) an herbicidally effective amount of a thiolcarbamate of the formula

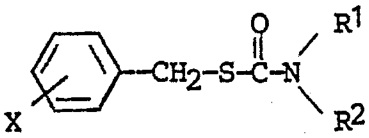

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a dimethyl urea compound of the formula

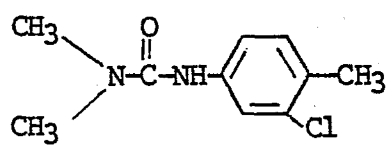

16. The method of Claim 15 wherein (a) is S-benzyl dipropyl thiolcarbamate and (b) is N'-(3-chloro-4-methylphenyl)-N'N-dimethyl urea.

17. The method of Claim 15 wherein (a) is S-benzyl ethyl, 1,2-dimethylpropyl thiolcarbamate and (b) is N'-(3-chloro-4-methylphenyl)-N'N-dimethyl urea.

18. The method of Claim 15 wherein (a) is S-(2-chlorobenzyl)-N,N-diethyl thiolcarbamate and (b) is N'-(3-chloro-4-methylphenyl)-N'N-dimethyl urea.

19. A method of controlling undesirable vegetation which comprises the pre-emergence application or postemergence application to said vegetation of a herbicidal composition comprising a mixture of

(a) an herbicidally effective amount of a thiolcarbamate of the formula

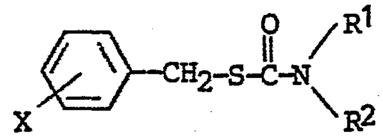

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of N-(4-isopropylphenyl)-N',N'-dimethylurea at a weight ratio of (a) to (b) of from about 0.01:1 to about 20:1.

20. A method of controlling undesirable vegetation which comprises the pre-emergence application or postemergence application to said vegetation of a herbicidal composition comprising a mixture of

(a) an herbicidally effective amount of a thiolcarbamate of the formula

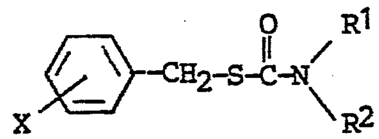

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of 3-(3,4-dichlorophenyl)-1-methoxy-1-methylurea at a weight ratio of (a) to (b) of from about 0.01:1 to about 20:1.

21. A method of controlling undesirable vegetation which comprises the pre-emergence application or postemergence application to said vegetation of a herbicidal composition comprising a mixture of

(a) an herbicidally effective amount of a thiolcarbamate of the formula

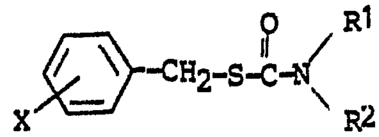

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of 1,3-dimethyl-3-(2-benzothiazolyl)urea at a weight ratio of (a) to (b) of from about 0.01:1 to about 20:1.

22. A method of controlling undesirable vegetation which comprises the pre-emergence application or postemergence application to said vegetation of a herbicidal composition comprising a mixture of

(a) an herbicidally effective amount of a thiolcarbamate of the formula

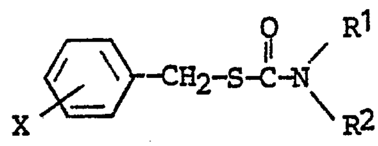

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of N-(3-chloro-4-methoxyphenyl)-N,N-dimethylurea at a weight ratio of (a) to (b) of from about 0.01:1 to about 20:1.

23. A method of controlling undesirable vegetation which comprises the pre-emergence application or postemergence application to said vegetation of a herbicidal composition comprising a mixture of

(a) an herbicidally effective amount of a thiolcarbamate of the formula

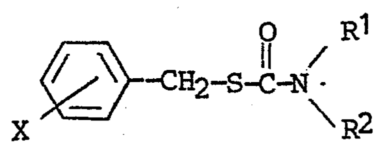

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of 1-n-butyl-3-(3,4-dichlorophenyl)-1-methylurea at a weight ratio of (a) to (b) of from about 0.01:1 to about 20:1.

24. A method of controlling undesirable vegetation which comprises the pre-emergence application or postemergence application to said vegetation of a herbicidal composition comprising a mixture of

(a) an herbicidally effective amount of a thiolcarbamate of the formula

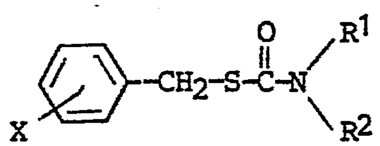

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of 2-t-butylamino-4-ethylamino-6-methylthio-s-triazine at a weight ratio of (a) to (b) of from about 0.01:1 to about 20:1.

25. A method of controlling undesirable vegetation which comprises the pre-emergence application or postemergence application to said vegetation of a herbicidal composition comprising a mixture of

(a) an herbicidally effective amount of a thiolcarbamate of the formula

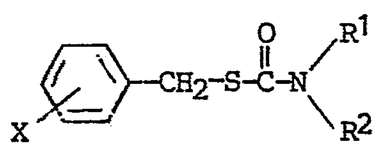

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of S-2,3,3-trichloroallyl-diisopropyl thiolcarbamate at a weight ratio of (a) to (b) of from about 0.01:1 to about 20:1.

26. A method of controlling undesirable vegetation which comprises the pre-emergence application or postemergence application to said vegetation of a herbicidal composition comprising a mixture of

(a) an herbicidally effective amount of a thiolcarbamate of the formula

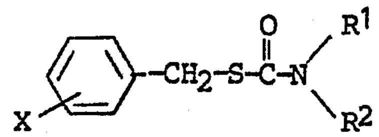

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of α,α,α-trifluoro-2,6-dinitro-N,N-dipropyl-p-toluidine at a weight ratio of (a) to (b) of from about 0.01:1 to about 20:1.

27. A method according to Claims 15, 16, 17, 18, 19, 20, 21, 22, 23, 24, 25 and 26 in which the weight ratio of (a) to (b) is from about 0.1:1 to about 10:1.

28. A method according to Claims 15, 16, 17, 18, 19, 20, 21, 22, 23, 24, 25 and 26 in which the weight ratio of (a) to (b) is from about 0.1:1 to about 5:1.

29. A synergistic herbicidal composition comprising a mixture of

(a) an herbicidally effective amount of a thiolcarbamate of the formula

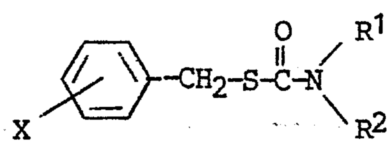

in which

X is hydrogen, chlorine or bromine; and

$R^1$ and $R^2$ are independently selected from the group consisting of $C_1$-$C_6$ alkyl and $C_5$-$C_7$ cycloalkyl,

(b) an herbicidally effective amount of a dimethyl urea compound of the formula

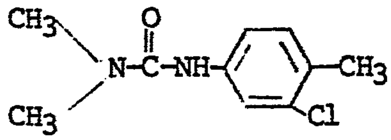

; and

(c) an inert diluent carrier

at a weight ratio of (a) to (b) of from about 0.01:1 to about 20:1.

30. The composition of Claim 29 wherein (a) is S-benzyl dipropyl thiolcarbamate and (b) is N'-(3-chloro-4-methylphenyl)-N'N-dimethyl urea.

31. The composition of Claim 29 wherein (a) is S-benzyl ethyl, 1,2-dimethylpropyl thiolcarbamate and (b) is N'-(3-chloro-4-methylphenyl)-N'N-dimethyl urea.

32. The composition of Claim 29 wherein (a) is S-(2-chlorobenzyl)-N,N-diethyl thiolcarbamate and (b) is N'-(3-chloro-4-methylphenyl)-N'N-dimethyl urea.

33. A synergistic herbicidal composition comprising a mixture of

(a) an herbicidally effective amount of a thiolcarbamate of the formula

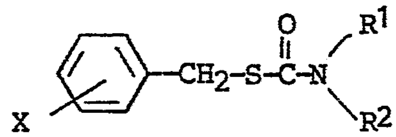

in which

X is hydrogen, chlorine or bromine; and

$R^1$ and $R^2$ are independently selected from the group consisting of $C_1$-$C_6$ alkyl and $C_5$-$C_7$ cycloalkyl;

(b) an herbicidally effective amount of N-(4-isopropylphenyl)-N',N'-dimethylurea; and

(c) an inert diluent carrier

at a weight ratio of (a) to (b) of from about 0.01:1 to about 20:1.

34. A synergistic herbicidal composition comprising a mixture of

(a) an herbicidally effective amount of a thiolcarbamate of the formula

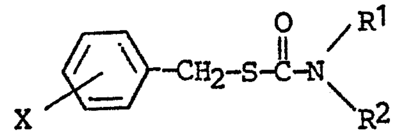

in which

X is hydrogen, chlorine or bromine; and

$R^1$ and $R^2$ are independently selected from the group consisting of $C_1$-$C_6$ alkyl and $C_5$-$C_7$ cycloalkyl;

(b) an herbicidally effective amount of 3-(3,4-dichlorophenyl)-1-methoxy-1-methylurea; and

(c) an inert diluent carrier

at a weight ratio of (a) to about 0.01:1 to about (b) of from 20:1.

35. A synergistic herbicidal composition comprising a mixture of

(a) an herbicidally effective amount of a thiolcarbamate of the formula

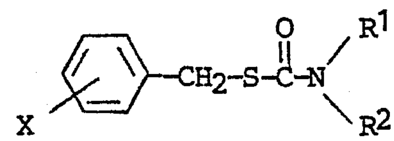

in which

X is hydrogen, chlorine or bromine; and

$R^1$ and $R^2$ are independently selected from the group consisting of $C_1$-$C_6$ alkyl and $C_5$-$C_7$ cycloalkyl;

(b) an herbicidally effective amount of 1,3-dimethyl-3-(2-benzothiazolyl)urea; and

(c) an inert diluent carrier

at a weight ratio of (a) to (b) of from about 0.01:1 to about 20:1.

36. A synergistic herbicidal composition comprising a mixture of

(a) an herbicidally effective amount of a thiolcarbamate of the formula

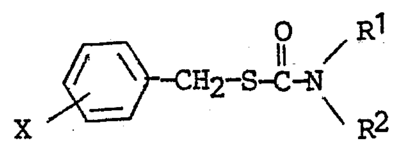

in which

X is hydrogen, chlorine or bromine; and

$R^1$ and $R^2$ are independently selected from the group consisting of $C_1$-$C_6$ alkyl and $C_5$-$C_7$ cycloalkyl;

(b) an herbicidally effective amount of N-(3-chloro-4-methoxyphenyl)-N,N-dimethylurea; and

(c) an inert diluent carrier

at a weight ratio of (a) to (b) of from about 0.01:1 to about 20:1.

37. A synergistic herbicidal composition comprising a mixture of

(a) an herbicidally effective amount of a thiolcarbamate of the formula

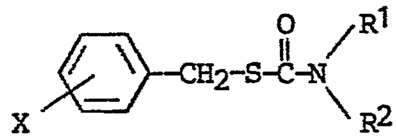

in which

X is hydrogen, chlorine or bromine; and

$R^1$ and $R^2$ are independently selected from the group consisting of $C_1$-$C_6$ alkyl and $C_5$-$C_7$ cycloalkyl;

(b) an herbicidally effective amount of 1-n-butyl-3-(3,4-dichlorophenyl)-1-methylurea; and

(c) an inert diluent carrier

at a weight ratio of (a) to (b) of from about 0.01:1 to about 20:1.

38. A synergistic herbicidal composition comprising a mixture of

(a) an herbicidally effective amount of a thiolcarbamate of the formula

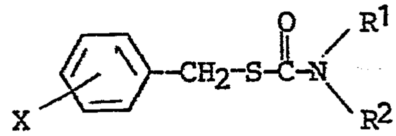

in which

X is hydrogen, chlorine or bromine; and

$R^1$ and $R^2$ are independently selected from the group consisting of $C_1$-$C_6$ alkyl and $C_5$-$C_7$ cycloalkyl;

(b) an herbicidally effective amount of 2-t-butylamino-4-ethylamino-6-methylthio-s-triazine; and

(c) an inert diluent carrier

at a weight ratio of (a) to (b) of from about 0.01:1 to about 20:1.

39. A synergistic herbicidal composition comprising a mixture of

(a) an herbicidally effective amount of a thiolcarbamate of the formula

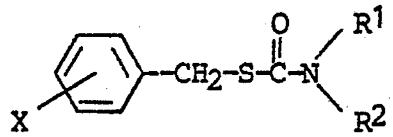

in which

X is hydrogen, chlorine or bromine; and

$R^1$ and $R^2$ are independently selected from the group consisting of $C_1$-$C_6$ alkyl and $C_5$-$C_7$ cycloalkyl;

(b) an herbicidally effective amount of S-2,3,3-trichloroallyl-diisopropyl thiolcarbamate; and

(c) an inert diluent carrier

at a weight ratio of (a) to (b) of from about 0.01:1 to about 20:1.

40. A synergistic herbicidal composition comprising a mixture of

(a) an herbicidally effective amount of a thiolcarbamate of the formula

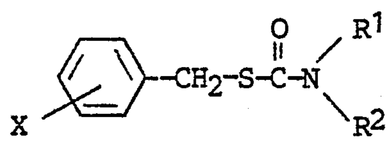

in which

X is hydrogen, chlorine or bromine; and

$R^1$ and $R^2$ are independently selected from the group consisting of $C_1$-$C_6$ alkyl and $C_5$-$C_7$ cycloalkyl;

(b) an herbicidally effective amount of $\alpha,\alpha,\alpha$-trifluoro-2,6-dinitro-N,N-dipropyl-p-toluidine; and

(c) an inert diluent carrier

at a weight ratio of (a) to (b) of from about 0.01:1 to about 20:1.

41. A composition according to Claims 29, 30, 31, 32, 33, 34, 35, 36, 37, 38, 39 and 40 in which the weight ratio of (a) to (b) is from about 0.1:1 to about 10:1.

42. A composition according to Claims 29, 30, 31, 32, 33, 34, 35, 36, 37, 38, 39 and 40 in which the weight ratio of (a) to (b) is from about 0.1:1 to about 5:1.

43. A synergistic composition comprising a mixture of

(a) an herbicidally effective amount of a thiolcarbamate of the formula

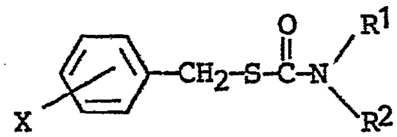

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of herbicide selected from the group consisting of thiolcarbamates, phenoxyphenyl derivatives, triazines, acetanilides, carbamates and substituted benzenesulfonamides.